(19) Europäisches Patentamt / European Patent Office / Office européen des brevets

(11) EP 2 214 035 B1

(12) # EUROPEAN PATENT SPECIFICATION

(45) Date of publication and mention of the grant of the patent: **30.08.2017 Bulletin 2017/35**

(21) Application number: **07790786.3**

(22) Date of filing: **13.07.2007**

(51) Int Cl.: ***G02B 1/04*** *(2006.01)* ***G02B 1/10*** *(2015.01)* *G02C 7/02 (2006.01)*

(86) International application number: **PCT/JP2007/064006**

(87) International publication number: **WO 2008/007779 (17.01.2008 Gazette 2008/03)**

(54) **PLASTIC LENS**

KUNSTSTOFFLINSE

LENTILLE PLASTIQUE

(84) Designated Contracting States: **DE ES FR GB IT**

(30) Priority: **14.07.2006 JP 2006193561**
**29.06.2007 JP 2007173062**

(43) Date of publication of application: **04.08.2010 Bulletin 2010/31**

(73) Proprietor: **HOYA CORPORATION Tokyo, 161-8525 (JP)**

(72) Inventors:
- **KOJIMA, Hiroshi Shinjyuku-ku, Tokyo 161-8525 (JP)**
- **SAKURAZAWA, Tsuyoshi Shinjyuku-ku, Tokyo 161-8525 (JP)**
- **ITOU, Minoru Shinjyuku-ku, Tokyo 161-8525 (JP)**
- **HASHIMOTO, Toshikazu Shinjyuku-ku, Tokyo 161-8525 (JP)**

(74) Representative: **Adam, Holger et al Kraus & Weisert Patentanwälte PartGmbB Thomas-Wimmer-Ring 15 80539 München (DE)**

(56) References cited:

**EP-A1- 1 655 342**
**EP-A2- 0 627 636**
**WO-A1-99/57212**
**WO-A1-2005/093465**
**JP-A- 7 026 207**
**JP-A- 09 227 830**
**JP-A- 2001 295 185**
**JP-A- 2004 252 437**
**US-A- 5 087 758**
**US-A- 5 165 992**
**US-A1- 2003 149 231**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 214 035 B1

## Description

### TECHNICAL FIELD

The present invention relates to a plastic lens, and in particular, relates to a plastic lens excellent in abrasion resistance, transparency, appearance and adhesion between a substrate and a cured film.

### BACKGROUND ART

A polythiourethane lens containing xylylene diisocyanate as a polyisocyanate compound and having a refractive index of about from 1.66 to 1.68 has been well known as it has good characteristics including a high refractive index, good processability and the like (Patent Document 1). A plastic lens obtained by reacting an epithio group-containing compound, such as bis(β-epithiopropyl)sulfide, bis(β-epithiopropyl)disulfide or the like, as a major component and having a refractive index of about 1.70 has also been well known (Patent Document 2).

In the case where these plastic lens substrates are used as a lens for spectacles, a cured film, which is referred to as a hard coat, is generally applied thereto. Upon coating and curing the hard coat on the plastic lens substrates, such a plastic lens has not yet been developed having both sufficient abrasion resistance and sufficient adhesion.

Patent Document 1: JP-A-9-208651
Patent Document 2: JP-A-2001-330701

Further prior art relating to similar plastic lenses is disclosed in JP-A-7-26207 and EP 1 655 342 A1.

### DISCLOSURE OF THE INVENTION

### PROBLEMS TO BE SOLVED BY THE INVENTION

The present invention has been made for solving the problems, and an object thereof is to provide a plastic lens having favorable adhesion and abrasion resistance with a lens containing a resin having an NHCO structure represented by the formula (A) shown later or a resin having a unit derived from a compound represented by the formula (B) shown later used as a substrate.

### MEANS FOR SOLVING THE PROBLEMS

As a result of earnest investigations for attaining the objects made by the inventors, it has been found that upon forming a cured film on the aforementioned substrate by reacting a coating composition containing the following components (i), (ii) and (iii), -H and -O in the carboxylic amide bond (carbonyldiimino structure) present on the surface of the lens form hydrogen bonds with -O and -H in the composition forming a hard coat to enhance the adhesion, thereby providing a plastic lens having favorable adhesion and abrasion resistance, and thus the present invention has been completed.

Accordingly, the present invention provides a plastic lens according to claim 1.

### ADVANTAGES OF THE INVENTION

The plastic lens of the present invention is excellent in abrasion resistance, transparency and appearance, and in particular, excellent in adhesion to a cured film.

### BEST MODE FOR CARRYING OUT THE INVENTION

The plastic lens of the present invention contains, as a substrate, a lens containing a resin having an NHCO structure represented by the formula (A) or a resin having a unit derived from a compound represented by the formula (B), and a cured film having an NHCO structure formed by reacting a coating composition containing the components (i), (ii) and (iii) directly on the substrate.

The components (i), (ii) and (iii) are described below.

The component (i) is described.

The component (i) in the present invention is at least one selected from an organosilicon compound represented by the general formula (1), an organosilicon compound represented by the general formula (2) and a hydrolysate of the organosilicon compounds.

$R^1_nSi(OR^2)_{4-n}$

In the general formula (1), $R^1$ represents a monovalent hydrocarbon group having from 3 to 20 carbon atoms and having a functional group (a vinyl group, an epoxy group, a styryl group, a methacryl group or an acrylic group), examples of which include a glycidoxymethyl group, an α-glycidoxyethyl group, a β-glycidoxyethyl group, an α-glycidoxypropyl group, a β-glycidoxypropyl group, a γ-glycidoxypropyl group, an α-glycidoxybutyl group, a β-glycidoxybutyl group, a γ-glycidoxybutyl group, a δ-glycidoxybutyl group, a vinyl group, a vinylmethyl group, a β-epoxycyclohexylethyl group, a p-styryl group, a γ-methacryloxypropyl group, a γ-acryloxy group, a γ-acryloxypropyl group and the like.

In the general formula (1), $R^2$ represents an alkyl group having from 1 to 8 carbon atoms, an aryl group having from 6 to 10 carbon atoms, an aralkyl group having from 7 to 10 carbon atoms or an acyl group having from 2 to 10 carbon atoms.

The alkyl group having from 1 to 8 carbon atoms represented by $R^2$ may be linear, branched or cyclic, and examples thereof include a methyl group, an ethyl group, a n-propyl group, an isopropyl group, a n-butyl group, an isobutyl group, a sec-butyl group, a tert-butyl group, a pentyl group, a hexyl group, a cyclopentyl group, a cyclohexyl group and the like. Examples of the aryl group include a phenyl group, a tolyl group and the like, examples of the aralkyl group include a benzyl group, a phenethyl group and the like, and examples of the acyl group include an acetyl group and the like.

In the general formula (1), n represents an integer of 1 or 2, in which when plural $R^1$ groups are present, the plural $R^1$ groups may be the same or different, and plural $OR^2$ groups may be the same or different,

Specific examples of the organosilicon compound represented by the general formula (1) include vinyltrimethoxysilane, vinyltriethoxysilane, vinylmethyldimethoxysilane, vinylmethyldiethoxysilane, β-epoxycyclohexylethyltrimethoxysilane, β-epoxycyclohexylethyltriethoxysilane, β-epoxycyclohexylethylmethyldimethoxysilane, β-epoxycyclohexylethylmethyldiethoxysilane, glycidoxymethyltrimethoxysilane, glycidoxymethyltriethoxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glycidoxypropylmethyldimethoxysilane, α-glycidoxypropylmethyldiethoxysilane, β-glycidoxypropylmethyldimethoxysilane, β-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, γ-glycidoxypropylphenyldiethoxysilane, p-styryltrimethoxysilane, p-styryltriethoxysilane, p-styrylmethyldimethoxysilane, p-styrylmethyldiethoxysilane, γ-methacryloxypropyltrimethoxysilane, γ-methacryloxypropyltriethoxysilane, γ-methacryloxypropylmethyldimethoxysilane, γ-methacryloxypropylmethyldiethoxysilane, γ-acryloxypropyltrimethoxysilane, γ-acryloxypropyltriethoxysilane, γ-acryloxypr.opylmethyldimethoxysilane, γ-acryloxypropylmethyldiethoxysilane and the like.

Among these, β-epoxycyclohexylethyltrimethoxysilane, β-epoxycyclohexylethyltriethoxysilane, β-epoxycyclohexylethylmethyldimethoxysilane, β-epoxycyclohexylethylmethyldiethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropylmethyldimethoxysilane, γ-glycidoxypropylmethyldiethoxysilane, γ-glycidoxypropylmethyldipropoxysilane and γ-glycidoxypropylmethyldibutoxysilane are preferred, and β-epoxycyclohexylethyltrimethoxysilane, β-epoxycyclohexylethyltriethoxysilane, γ-glycidoxypropyltrimethoxysilane, γ-glycidoxypropyltriethoxysilane, γ-glycidoxypropyltripropoxysilane and γ-glycidoxypropyltributoxysilane are more preferred.

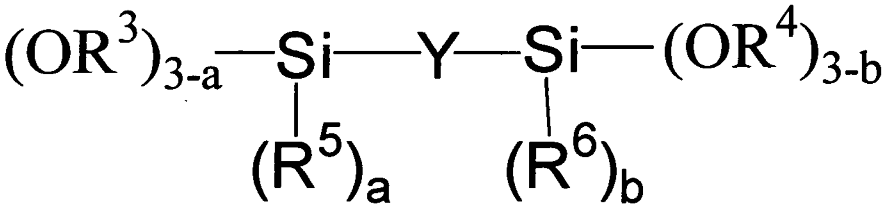

(2)

In the general formula (2), $R^3$ and $R^4$ each represent an alkyl group having from 1 to 4 carbon atoms or an acyl group having from 2 to 4 carbon atoms, and may be the same or different; and $R^5$ and $R^6$ each represent a monovalent

hydrocarbon group having from 1 to 5 carbon atoms and having or not having a functional group, and may be the same or different.

Examples of the alkyl group represented by $R^3$ and $R^4$ include a methyl group, an ethyl group, a n-propyl group, an isopropyl group, a n-butyl group, an isobutyl group, a sec-butyl group, a tert-butyl group and the like, and examples of the acyl group having 2 to 4 carbon atoms include an acetyl group and the like.

Examples of the hydrocarbon group represented by $R^5$ and $R^6$ include an alkyl group having from 1 to 5 carbon atoms, an alkenyl group having from 2 to 5 carbon atoms and the like. These may be a linear group or a branched group. Examples of the alkyl group include a methyl group, an ethyl group, a n-propyl group, an isopropyl group, a n-butyl group, a sec-butyl group, a tert-butyl group, a pentyl group and the like, and examples of the alkenyl group include a vinyl group, an allyl group, a butenyl group and the like.

Examples of the functional group of the hydrocarbon group include a halogen atom, a glycidoxy group, an epoxy group, an amino group, a mercapto group, a cyano group, a (meth)acryloyloxy group and the like.

In the general formula (2), Y represents a divalent hydrocarbon group having from 2 to 20 carbon atoms, and preferably an alkylene group and an alkylidene group each having from 2 to 10 carbon atoms, examples of which include a methylene group, an ethylene group, a propylene group, a butylene group, an ethylidene group, a propylidene group and the like.

In the general formula (2), a and b each represent an integer of 0 or 1, in which plural $OR^3$ groups may be the same or different, and plural $OR^4$ groups may be the same or different.

Specific examples of the organosilicon compound represented by the general formula (2) include bis(triethoxysilyl)ethane, bis(trimethoxysilyl)ethane, bis(triethoxysilyl)methane, bis(trimethoxysilyl)hexane, bis(triethoxysilyl)octane and the like, and bis(triethoxysilyl)ethane and bis(trimethoxysilyl)ethane are preferred.

The component (ii) is described.

The component (ii) in the present invention is an amino group-containing organosilicon compound.

Examples of the compound as the component (ii) include β-aminoethylaminopropylmethyldimethoxysilane, β-aminoethylaminopropylmethyldiethoxysilane, β-aminoethylaminopropyltrimethoxysilane, β-aminoethylaminopropyltriethoxysilane, γ-aminopropylmethyldimethoxysilane, γ-aminopropylmethyldiethoxysilane, γ-aminopropyltrimethoxysilane, γ-aminopropyltriethoxysilane, N-phenyl-γ-aminopropylmethyldimethoxysilane, N-phenyl-γ-aminopropylmethyldiethoxysilane, N-phenyl-γ-aminopropyltrimethoxysilane, and N-phenyl-γ-aminopropyltriethoxysilane.

Among these, β-aminoethylaminopropylmethyldimethoxysilane, β-aminoethylaminopropylmethyldiethoxysilane, β-aminoethylaminopropyltrimethoxysilane, β-aminoethylaminopropyltriethoxysilane, γ-aminopropylmethyldimethoxysilane, γ-aminopropylmethyldiethoxysilane, γ-aminopropyltrimethoxysilane, γ-aminopropyltriethoxysilane, N-phenyl-γ-aminopropylmethyldimethoxysilane, N-phenyl-γ-aminopropylmethyldiethoxysilane, N-phenyl-γ-aminopropyltrimethoxysilane, and N-phenyl-γ-aminopropyltriethoxysilane are more preferred.

As the component (ii), at least one selected from an amino group-containing organosilicon compound represented by the following general formula (3) and a hydrolysate thereof is selected:

$$R^7{}_nSi(OR^8)_{4-n} \qquad (3)$$

In the general formula (3), $R^7$ represents a monovalent amino group-containing hydrocarbon group having from 1 to 20 carbon atoms, examples of which include γ-aminopropyl group, an N-(β-aminoethyl)-γ-aminopropyl group, an N-phenyl-γ-aminopropyl group and the like.

In the general formula (3), $R^8$ represents an alkyl group having from 1 to 8 carbon atoms, an aryl group having from 6 to 10 carbon atoms, an aralkyl group having from 7 to 10 carbon atoms or an acyl group having from 2 to 10 carbon atoms, examples of which include the same groups shown for $R^2$.

In the general formula (3), n represents an integer of 1 or 2, in which when plural $R^7$ groups are present, the plural $R^7$ groups may be the same or different, and plural $OR^8$ groups may be the same or different.

Specific examples of the organosilicon compound represented by the general formula (3) include

γ-aminopropyltrimethoxysilane,
γ-aminopropyldimethoxymethylsilane,
γ-aminopropyltriethoxysilane,
γ-aminopropyldiethoxymethylsilane,
N-β-(aminoethyl)-γ-aminopropyldimethoxymethylsilane,
N-β-(aminoethyl)-γ-aminopropyltrimethoxysilane,
N-β-(aminoethyl)-γ-aminopropyltriethoxysilane,
N-β-(aminoethyl)-γ-aminopropyldiethoxymethylsilane,
N-phenyl-γ-aminopropyltrimethoxysilane,
N-phenyl-γ-aminopropyldimethoxymethylsilane,

N-phenyl-γ-aminopropyltriethoxysilane,
N-phenyl-γ-aminopropyldiethoxymethylsilane and the like.

Among these, γ-aminopropyltrimethoxysilane, γ-aminopropyltriethoxysilane, γ-aminopropyldimethoxymethylsilane and γ-aminopropyldiethoxymethylsilane are preferred, and a γ-aminopropyltrialkoxysilane, such as γ-aminopropyltrimethoxysilane and γ-aminopropyltriethoxysilane, is more preferred.
The component (iii) is described.
The component (iii) in the present invention is at least one selected from an isocyanate group-containing organosilicon compound.
Examples of the compound as the component (iii) include

γ-isocyanatopropylmethyldimethoxysilane,
γ-isocyanatopropylmethyldiethoxysilane,
γ-isocyanatopropyltrimethoxysilane,
γ-isocyanatopropyltriethoxysilane and the like.

Among these, γ-isocyanatopropylmethyldimethoxysilane, γ-isocyanatopropylmethyldiethoxysilane, γ-isocyanatopropyltrimethoxysilane and γ-isocyanatopropyltriethoxysilane are more preferred.
As the component (iii), at least one selected from an isocyanate group-containing organosilicon compound represented by the following general formula (4) and a hydrolysate thereof is selected:

$$R^9_nSi(OR^{10})_{4-n} \qquad (4)$$

In the general formula (4), $R^9$ represents a monovalent isocyanate group-containing hydrocarbon group having from 1 to 20 carbon atoms, examples of which include an isocyanatomethyl group, an α-isocyanatoethyl group, a β-isocyanatoethyl group, an α-isocyanatopropyl group, a β-isocyanatopropyl group, a γ-isocyanatopropyl group and the like.
In the general formula (4), $R^{10}$ represents an alkyl group having from 1 to 8 carbon atoms, an aryl group having from 6 to 10 carbon atoms, an aralkyl group having from 7 to 10 carbon atoms or an acyl group having from 2 to 10 carbon atoms, examples of which include the same groups shown for $R^2$.
In the general formula (4), n represents an integer of 1 or 2, in which when plural $R^9$ groups are present, the plural $R^9$ groups may be the same or different, and plural $OR^{10}$ groups may be the same or different.
Specific examples of the organosilicon compound represented by the general formula (4) include

γ-isocyanatopropyltrimethoxysilane,
γ-isocyanatopropyldimethoxymethylsilane,
γ-isocyanatopropyltriethoxysilane,
γ-isocyanatopropyldiethoxymethylsilane and the like, and a
γ-isocyanatopropyltrialkoxysilane, such as
γ-isocyanatopropyltrimethoxysilane and
γ-isocyanatopropyltriethoxysilane, is preferred.

In the coating composition used in the present invention, the molar ratio of the functional groups in the components (i), (ii) and (iii) is from 99/0.5/0/5 to 10/45/45, preferably from 97/1.5/1.5 to 40/30/30, and more preferably from 95/2.5/2.5 to 80/10/10.
The coating composition in the present invention may contain, depending on desire, a curing agent for accelerating reaction, a metallic oxide in a fine particle form for adjusting the refractive index to the lens as the substrate, and various kinds of organic solvents and surfactants for enhancing the wettability of the coating composition upon coating to improve the smoothness of the cured film. Furthermore, an ultraviolet ray absorbent, an antioxidant, a light stabilizer and the like may be added unless the properties of the cured film are impaired.
Examples of the curing agent include, while not limited, an amine compound, such as allylamine, ethylamine and the like, a salt or a metallic salt having various kinds of acids and bases including a Lewis acid and a Lewis base, such as an organic carboxylic acid, chromic acid, hypochlorous acid, boric acid, perchloric acid, bromic acid, selenious acid, thiosulfuric acid, orthosilicic acid, thiocyanic acid, nitrous acid, aluminic acid, carbonic acid and the like, a metallic alkoxide or a metallic chelate compound thereof having aluminum, zirconium or titanium, and the like. Particularly preferred examples of the curing agent include a metallic acetylacetonate salt from the standpoint of abrasion resistance. Examples of the metallic acetylacetonate salt include a metallic complex compound represented by $M^1(CH_3COCHCOCH_3)_{n1}(OR)_{n2}$ (wherein $M^1$ represents Zn(II), Ti(IV), Co(II), Fe(II), Cr(III), Mn(II), V(III), V(IV), Ca(II), Co(III), Cu (II), Mg (II) or Ni (II); R represents a hydrocarbon group having from 1 to 8 carbon atoms; and n1+n2 is a

value corresponding to the valence of $M^1$ and is 2, 3 or 4, in which n2 is 0, 1 or 2). Examples of R include the groups having from 1 to 8 carbon atoms shown for the groups in the general formulae (1) to (4).

Examples of the metallic oxide in a fine particle form include, while not limited, fine particles of aluminum oxide, titanium oxide, antimony oxide, zirconium oxide, silicon oxide, cerium oxide, iron oxide, a modified zirconium oxide-stannic oxide complex sol and the like, and the following sol is used from the standpoint of enhancement of abrasion resistance and suppression of interference fringes.

Among these, such modified zirconium oxide-stannic oxide complex colloid particles (C) are preferred that contains zirconium oxide-stannic oxide complex colloid particles (A2) having a structure containing colloid particles of zirconium oxide and colloid particles of stannic oxide bonded at a ratio of from 0.02 to 0.4 in terms of $SnO_2/ZnO_2$ based on the molar ratio of the oxides, having a particle diameter of from 2.5 to 100 nm, and containing amine-containing $Sb_2O_5$, as a core, having coated on the surface thereof colloid particles (B2) of a tungsten oxide-stannic oxide-silicon dioxide complex having a mass ratio $WO_3/SnO_2$ of from 0.1 to 100, a mass ratio $SiO_2/SnO_2$ of from 0.1 to 100 and a particle diameter of from 2 to 7 nm, with a mass ratio (B2) / (A2) being from 0.02 to 1 based on the mass ratio of the metal oxides thereof, and that has a particle diameter of from 2.5 to 100 nm.

In the present invention, it is preferred that the component (ii) and the component (iii) are reacted with each other, and then the component (i) is added thereto and reacted therewith since the adhesion is further improved.

Examples where the component (ii) and the component (iii) are reacted with each other include the following examples 1 to 3.

Example 1: component (ii) (amino group-containing organic compound) + component (iii) (isocyanate silane coupling agent)

An isocyanate silane coupling agent is reacted with an amino group-containing organic compound to provide an organosilicon compound having the corresponding group.

Example: xylylene diamine (center) + isocyanate silane coupling agent on both ends

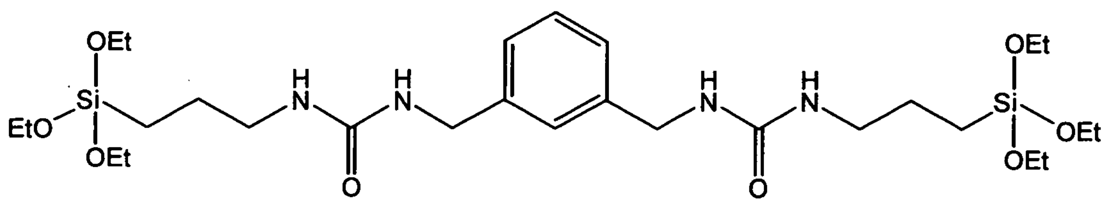

Example 2: component (ii) (hydroxyl group-containing and amino group-containing organic compound) + component (iii) (isocyanate silane coupling agent)

An isocyanate silane coupling agent is reacted with a hydroxyl group-containing organic compound to provide an organosilicon compound having the corresponding group (urethane).

Example: ethylene glycol (center) + isocyanate silane coupling agent on both ends

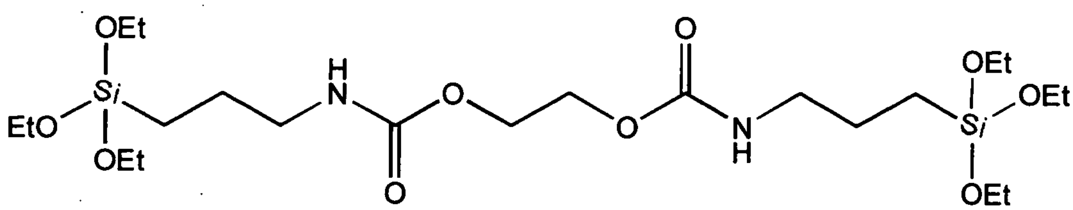

Example 3: component (ii) (hydroxyl group-containing and amino group-containing organic compound) + component (iii) (isocyanate silane coupling agent)

An isocyanate silane coupling agent is reacted with a mercapto group-containing organosilicon compound to provide an organosilicon compound having the corresponding group (thiourethane).

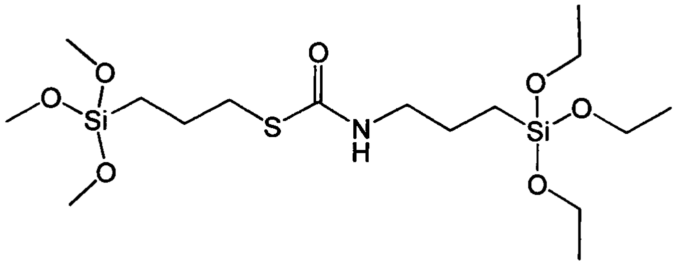

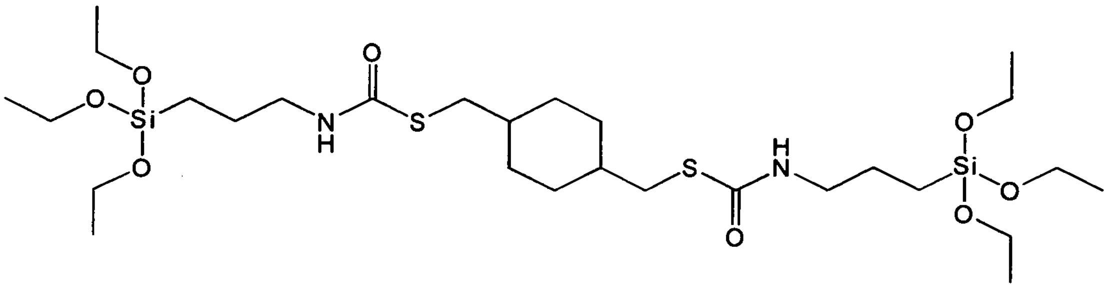

In the present invention, the substrate of the plastic lens contains a resin having an NHCO structure represented by the formula (A):

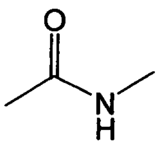

(A)

Examples having the NHCO structure include the following structures (a), (b) and (c).

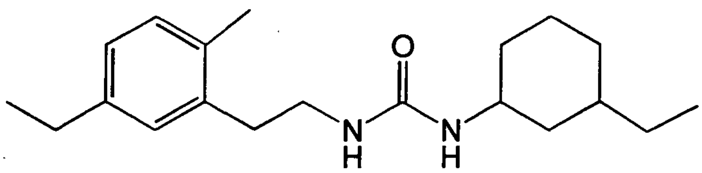

(a)

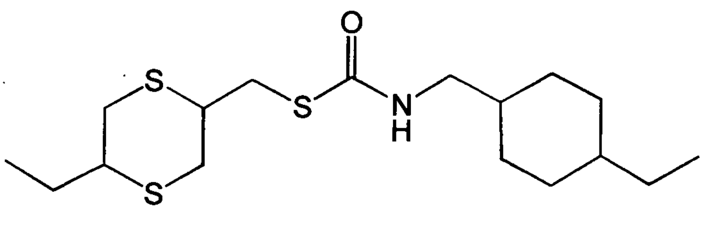

(b)

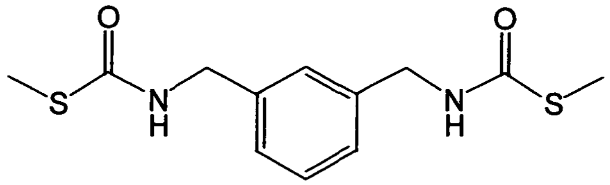

(c)

While the aforementioned plastic lens contains both -O and -H in the structure thereof, a plastic lens containing a resin containing, only one of them can be enhanced in adhesion through hydrogen bonds since the hard coat film contains both -O and -H.

In the present invention, the plastic lens may contain a resin having a unit derived from a compound represented by the formula (B) in addition to the aforementioned resin having an NHCO structure:

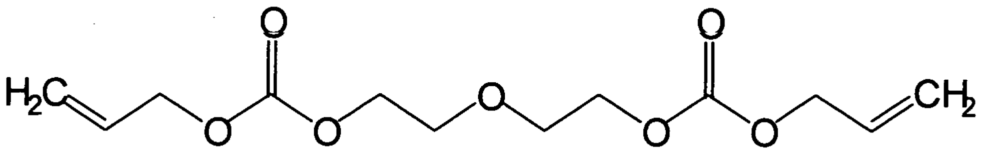

(B)

In addition to the aforementioned examples, examples of the lens substrate in the present invention include HOYA EYRY (a trade name, produced by HOYA Corporation), MR-6™, MR-7™, MR-8™ and MR-10™ (trade names, produced by Mitsui Chemicals, Inc.), and the like.

The refractive index (nd or ne, where nd is a refractive index measured with helium as the measurement standard wavelength, and ne is a refractive index measured with mercury as the measurement standard wavelength) of the lens substrate is preferably 1.53 or more.

The substrate of the plastic lens of the present invention preferably contains a polythiourethane lens obtained by reacting xylylene diisocyanate and polythiol, or a sulfur-containing lens obtained by reacting a lens raw material monomer containing a compound having an epithio group.

The polythiourethane lens obtained by reacting xylylene diisocyanate and polythiol preferably has a refractive index (nd or ne, where nd is a refractive index measured with helium as the measurement standard wavelength, and ne is a refractive index measured with mercury as the measurement standard wavelength) of about from 1.65 to 1.69, and as the polythiol compound, mercaptomethyldithianeoctaonedithiol and/or bis(mercaptomethyl)trithiaundecanedithiol are preferably used as a component.

In addition to xylylene diisocyanate, another polyisocyanate compound, such as di(isocyanatomethyl)bicycloheptane, bis(isocyanatomethyl)-1,4-dithiane, dicyclohexylmethane diisocyanate and the like, may be added in such an extent that does not impair the other properties. The content molar ratio of xylylene diisocyanate is preferably 50% by mol or more based on the total polyisocyanate compounds.

As for the polythiol compound, in addition to mercaptomethyldithianeoctaonedithiol and/or bis(mercaptomethyl)trithiaundecanedithiol, another polythiol compound (examples of which include an aliphatic thiol, such as methanedithiol, 1,2-ethanedithiol, 1, 1-propanedithiol and the like, an aliphatic thiol containing a sulfur atom in addition to the mercapto group, such as dithiodiglycolic acid bis(2,3-dimercaptopropyl ester), dithiodipropionic acid (2,3-dimercaptopropyl ester), bis(1;3-dimercapto-2-propyl)sulfide and the like, a heterocyclic compound having a sulfur atom in addition to the mercapto group, such as 3,4-thiophenedithiol, tetrahydrothiophene-2,5-dimercaptomethyl and the like, and the like) may be added in such an extent that does not impair the properties of the lens.

The sulfur-containing lens obtained by reacting a lens raw material monomer containing, as an essential component, a compound having an epithio group preferably has a refractive index (nd or ne) of about from 1.69 to 1.72, and examples of the compound having an epithio group include bis(β-epithiopropyl)sulfide and/or bis(β-epithiopropyl)disulfide. In addition to the compound having an epithio group, a known polyisocyanate compound and a known polythiol compound may be added in such an extent that does not impair the other properties. Examples of the polyisocyanate compound and the polythiol compound include those having been described above.

In the sulfur-containing lens, the amount of the compound having an epithio group is preferably from 60 to 90% by weight based on the total amount of the lens raw material monomers.

Examples of the method for forming a cured film on the substrate by using the coating composition in the present invention include a method of coating the coating composition on the substrate. A method that is ordinarily employed, such as a dipping method, a spin coating method, a spraying method and the like, may be used as the coating method, and a dipping method and a spin coating method are particularly desired from the standpoint of surface accuracy.

In the present invention, reaction and curing of the coating composition is generally performed by drying with

hot air or irradiation of an active energy ray, and is generally performed under curing conditions of hot air at 70 to 200°C, and preferably from 90 to 150°C. Examples of the active energy ray include a far-infrared ray and the like, whereby damages due to heat can be reduced to low level.

Before coating the coating composition on the substrate, the lens substrate may be subjected to a chemical treatment with an acid, an alkali or various kinds of organic solvents, a physical treatment with plasma, an ultraviolet ray or the like, a detergent treatment using various kinds of detergents, a sand-blast treatment, or a primer treatment using various kinds of resins, thereby enhancing the adhesion between the substrate and the cured film, and the like.

After forming the cured film by coating the coating composition on the lens substrate, an antireflection film containing an inorganic oxide or an organic oxide as a raw material may be formed on the cured film by a physical vapor deposition method, such as a vacuum deposition method, a sputtering method and the like. Furthermore, for example, various functional films having, for example, water repellency, antistatic property, antifogging property and the like may be applied on the antireflection film indirectly, directly or in combination.

The plastic lens of the present invention can be preferably used as a lens for spectacles.

In this case, the difference in refractive index between the lens substrate and the cured film is preferably adjusted, and the difference in refractive index is preferably ±0.3 or less, and preferably does not exceed ±0.5.

EXAMPLE

The present invention will be described in more detail with reference to examples, but the present invention is not limited to the examples.

The evaluations of properties in Examples and Comparative Examples were performed as follows. Evaluation Methods

(1) Evaluation of Adhesion

The cured film or the antireflection film was cross-cut into 1.00 squares at an interval of 1.5 mm, and an adhesive tape (Cellotape™, a trade name, produced by Nichiban Co., Ltd.) was firmly adhered to the cross-cut area. Thereafter, the adhesive tape was quickly peeled off, and then the state of peel-off of the cured film was investigated. The evaluation standard was as follows.

AA no peel-off
A from 1 to 10 squares peeled off
B from 11 to 50 squares peeled off
C from 51 to 100 squares peeled off

(2) Evaluation of Abrasion Resistance

The surface of the cured film or the antireflection film was rubbed with steel wool #0000 reciprocally 20 times under a load of 2 kg, and the resistance to scratch marks was visually evaluated. The evaluation standard was as follows.

AA substantially no scratch mark
A less than 5 scratch marks formed
B 5 or more and less than 10 scratch marks formed
C 10 or more scratch marks formed or scratch marks formed equivalently to the optical substrate

(3) Evaluation of Transparency

The presence of fog in the cured film was visually investigated under a fluorescent lamp in a dark room. The evaluation standard was as follows.

AA no fog found
A substantially no fog found
B slight fog found
C significant fog found

(4) Evaluation of Cracks

The optical member having the cured film was visually investigated under a fluorescent lamp. The evaluation

standard was as follows.

AA no crack formed
A 1 or 2 short cracks of less than 1 mm formed from the edge of the lens
B less than 5 cracks of 1 mm or more formed from the edge or the center of the lens
C 5 or more cracks of 1 mm or more formed from the edge or the center of the lens

(5) Measurement of Bayer Value

The Bayer value was measured from the difference in change of the haze value with respect to the standard lens by using an abrasion tester, Bayer Abrasion Tester (a trade name, produced by COLTS, Inc.) and Haze Value Measuring Equipment (a trade name, produced by Murakami Color Research Laboratory Co., Ltd.).

Number of Samples and Measurement Method

(1) Three standard lenses (HOYA Hi-Lux (a trade name, produced by HOYA Corporation, refractive index (ne) : 1.50) and three sample lenses were prepared.
(2) The haze value before the abrasion test was measured.
(3) The abrasion test was performed with Bayer Abrasion Tester.
(4) The haze value after the abrasion test was measured.
(5) The Bayer value was calculated from the following expression. An average value of three lenses was obtained.

$$\text{Bayer value} = (\text{change in haze value of standard lens}) / (\text{change in haze value of sample lens})$$

A higher Bayer value means a higher hardness of the film.

Example 1

(1) Production of Coating Composition

30 parts by mass of diacetone alcohol (DAA) as a solvent and 2.7 parts by mass of γ-aminopropyltriethoxysilane as the component (ii) (3.8% by mol based on the components (i), (ii) and (iii)) were mixed in an atmosphere at 5°C. 3.0 parts by mass of γ-isocyanatopropyltriethoxysilane as the component (iii) (3.8% by mol based on the components (i), (ii) and (iii)) was added dropwise to the mixed solution under stirring, followed by stirring for 4 hours. Subsequently, 69.8 parts by mass of γ-glycidoxypropyltrimethoxysilane as the component (i) (92. 4% by mol based on the components (i), (ii) and (iii)) was mixed therewith, and hydrochloric acid having a concentration of 0.01 mol/L was added dropwise thereto under stirring, followed by stirring for 24 hours. According to the operation, a hydrolysate of a silane coupling agent was obtained.

20 parts by mass of diacetone alcohol (DAA) and 80 parts by mass of propylene glycol monomethyl ether (PGM) as a solvent were mixed with 180 parts by mass of a modified tin oxide-zirconium oxide-tungsten oxide-silicon oxide composite methanol sol (produced by Nisshan Chemical Industries, Ltd.) obtained according to Production Example 1 disclosed in paragraphs (0048) to (0055) of JP-A-2005-263854 as a sol component under stirring, followed by stirring for 1 hour, in an atmosphere at 5°C. Thereafter, the hydrolysate of a silane coupling agent prepared above was added dropwise thereto under stirring, followed by stirring for 24 hours. Subsequently, 0.25 part by mass of a silicone surfactant (Y-7006, a trade name, produced by Dow Corning Toray Co., Ltd.) and 5 parts by mass of aluminum trisacetylacetnate as a curing agent were added sequentially thereto, followed by stirring for 150 hours. The resulting solution was filtered with a 0.5-μm filter to provide a coating composition. In this Example, the difference in refractive index with respect to the substrate was controlled to prevent interference fringes from occurring.

(2) Formation of Cured Film

A lens substrate (a lens substrate obtained by reacting xylylene diisocyanate and bis(mercaptomethyl)trithiaundecanedithiol (refractive index (ne) : 1.67) hereinafter referred to as "lens substrate A") was dipped in a 10% by

weight sodium hydroxide aqueous solution at 60°C for 300 seconds, and then rinsed with ion exchanged water for 300 seconds under application of ultrasonic wave of 28 kHz. Finally, the substrate was dried in an atmosphere at 70°C. The sequence of operations was designated as a substrate pretreatment.

The lens substrate A having been subjected to the pretreatment was dipped in the coating composition for 30 seconds and then drawn up therefrom at 30 cm/min by a dipping method, and a cured film (refractive index (ne): 1.65) was formed on the substrate under conditions of 110°C and 60 minutes. The evaluation results of the properties thereof are shown in Table 1.

(3) Formation of Antireflection Film

The plastic lens substrate having the cured film formed thereon was placed in a vapor deposition equipment and heated to 65°C while evacuating, after evacuating to 2.7 mPa, vapor deposition materials were vapor-deposited thereon by an electron beam heating method to form an antireflection film containing, from the side of the hard coat, a first layer containing $SiO_2$ having nd = 1.46 and nλ = 0.08, a second layer containing $Nb_2O_5$, $ZrO_2$ and $Y_2O_3$ having nd = 2.21 and nλ = 0.04, a third layer containing $SiO_2$ having nd = 1.46 and nλ = 0.55, a fourth layer containing $Nb_2O_5$, $ZrO_2$ and $Y_2O_3$ having nd = 2.21 and nλ = 0.12, a fifth layer containing $SiO_2$ having nd = 1.46 and nλ = 0.09, a sixth layer containing $Nb_2O_5$, $ZrO_2$ and $Y_2O_3$ having nd = 2.21 and nλ = 0.17, and a seventh layer containing $SiO_2$ having nd = 1.46 and nλ = 0.28, wherein nd represents the refractive index, and nλ represents the thickness. The evaluation results of the properties thereof are shown in Table 1.

Example 2

A cured film and an antireflection film were formed in the same procedures as in Example 1 except that a plastic lens substrate obtained by reacting 9.30 parts by weight of bis(isocyanatomethyl)-1,4-dithiane, 25.70 parts by weight of bis(mercaptomethyl)-1,4-dithiane and 65.0 parts by weight of bis (β-epithiopropyl) sulfide according to the method disclosed in paragraphs [0013] to [0014] of JP-A-2001-330701 (refractive index (ne): 1.70, hereinafter referred to as "lens substrate B") was used as a lens substrate instead of the lens substrate A. The evaluation results of the properties thereof are shown in Table 1.

Example 3

A plastic lens was produced in the same manner as in Example 1 except that a sol of composite colloid particles (C) shown below was used instead of the modified tin oxide-zirconium oxide-tungsten oxide-silicon oxide composite methanol sol. The evaluation results of the properties revealed that the similar results as in Example 1 were obtained.

The composite colloid particles (C) used in Example 3 were modified zirconium oxide-stannic oxide complex colloid particles (C) that contains zirconium oxide-stannic oxide composite colloid particles (A2) having a structure containing colloid particles of zirconium oxide and colloid particles of stannic oxide bonded at a ratio of from 0.02 to 0.4 in terms of $SnO_2/ZnO_2$ based on the molar ratio of the oxides, having a particle diameter of from 2.5 to 100 nm, and containing amine-containing $Sb_2O_5$, as a core, having coated on the surface thereof colloid particles (B2) of a tungsten oxide-stannic oxide-silicon dioxide complex having a mass ratio $WO_3/SnO_2$ of from 0.1 to 100, a mass ratio $SiO_2/SnO_2$ of from 0.1 to 100 and a particle diameter of from 2 to 7 nm, with a mass ratio (B2) / (A2) being from 0.02 to 1 based on the mass ratio of the metallic oxides, and that has a particle diameter of from 2.5 to 100 nm.

Example 4

A cured film and an antireflection film were formed in the same procedures as in Example 3 except that the lens substrate B was used as a lens substrate instead of the lens substrate A. The evaluation results of the properties thereof are shown in Table 1.

Example 5

A coating composition was prepared in the same manner as in Example 1 except that a modified tin oxide-titanium oxide-zirconium oxide composite methanol sol (HIT Series, a trade name, produced by Nisshan Chemical Industries, Ltd.) was used instead of the modified tin oxide-zirconium oxide-tungsten oxide-silicon oxide composite methanol sol, and a cured film and an antireflection film were formed on the lens substrate A in the same procedures as in Example 1. The evaluation results of the properties thereof are shown in Table 1.

Example 6

A cured film and an antireflection film were formed in the same procedures as in Example 5 except that the lens substrate B was used as a lens substrate instead of the lens substrate A. The evaluation results of the properties thereof are shown in Table 1.

Example 7

A coating composition was prepared in the same manner as in Example 1 except that a modified titanium oxide-silicon oxide-zirconium oxide composite methanol sol (OPT LAKE 1130Z, a trade name, produced by JGC Catalysts and Chemicals Ltd.) was used instead of the modified tin oxide-zirconium oxide-tungsten oxide-silicon oxide composite methanol sol, and a cured film and an antireflection film were formed on the lens substrate A in the same procedures as in Example 1. The evaluation results of the properties thereof are shown in Table 1.

Example 8

A cured film and an antireflection film were formed in the same procedures as in Example 7 except that the lens substrate B was used as a lens substrate instead of the lens substrate A. The evaluation results of the properties thereof are shown in Table 1.

Example 9

A coating composition was prepared in the same manner as in Example 1 except that a modified titanium oxide-tin oxide-silicon oxide-zirconium oxide composite methanol sol (OPT LAKE 1120Z, a trade name, produced by JGC Catalysts and Chemicals Ltd.) was used instead of the modified tin oxide-zirconium oxide-tungsten oxide-silicon oxide composite methanol sol, and a cured film and an antireflection film were formed on the lens substrate A in the same procedures as in Example 1. The evaluation results of the properties thereof are shown in Table 1.

Example 10

A cured film and an antireflection film were formed in the same procedures as in Example 9 except that the lens substrate B was used as a lens substrate instead of the lens substrate A. The evaluation results of the properties thereof are shown in Table 1.

Example 11

A coating composition was prepared in the same manner as in Example 1 except that 2.9 parts by mass of γ-aminopropyltrimethoxysilane (5.0% by mol based on the components (i), (ii) and (iii)) was used instead of 2.7 parts by mass of γ-aminopropyltriethoxysilane (3.8% by mol based on the components (i), (ii) and (iii)), and the amount of γ-isocyanatopropyltriethoxysilane was changed from 3.0 parts by mass (3.8% by mol based on the components (i), (ii) and (iii)) to 4.1 parts by mass (5% by mol based on the components (i), (ii) and (iii)), and a cured film and an antireflection film were formed on the lens substrate A in the same procedures as in Example 1. The evaluation results of the properties thereof are shown in Table 1.

Example 12

A cured film and an antireflection film were formed in the same procedures as in Example 11 except that the lens substrate B was used as a lens substrate instead of the lens substrate A. The evaluation results of the properties thereof are shown in Table 1.

Example 13

A coating composition was prepared in the same manner as in Example 1 except that 2.6 parts by mass of γ-isocyanatopropyltrimethoxysilane (4% by mol based on the components (i), (ii) and (iii)) was used instead of 3.0 parts by mass of γ-isocyanatopropyltriethoxysilane (3.8% by mol based on the components (i), (ii) and (iii)), and the amount of γ-aminopropyltriethoxysilane was changed from 2.7 parts by mass (3.8% by mol based on the components (i), (ii) and (iii)) to 2.8 parts by mass (4% by mol based on the components (i), (ii) and (iii)), and a cured film and an antireflection film were formed on the lens substrate A in the same procedures as in Example 1. The evaluation results of the properties

thereof are shown in Table 1.

Example 14

A cured film and an antireflection film were formed in the same procedures as in Example 13 except that the lens substrate B was used as a lens substrate instead of the lens substrate A. The evaluation results of the properties thereof are shown in Table 1.

Example 15

A coating composition was prepared in the same manner as in Example 1 except that 1.7 parts by mass of γ-aminopropyltrimethoxysilane (3.0% by mol based on the components (i), (ii) and (iii)) was used instead of 2.7 parts by mass of γ-aminopropyltriethoxysilane (3.8% by mol based on the components (i), (ii) and (iii)), and 1.9 parts by mass of γ-isocyanatopropyltrimethoxysilane (3.0% by mol based on the components (i), (ii) and (iii)) was used instead of 3.0 parts by mass of γ-isocyanatopropyltriethoxysilane (3.8% by mol based on the components (i), (ii) and (iii)), and a cured film and an antireflection film were formed on the lens substrate A in the same procedures as in Example 1. The evaluation results of the properties thereof are shown in Table 1.

Example 16

A cured film and an antireflection film were formed in the same procedures as in Example 15 except that the lens substrate B was used as a lens substrate instead of the lens substrate A. The evaluation results of the properties thereof are shown in Table 1.

Example 17

A cured film and an antireflection film were formed in the same procedures as in Example 1 except that a lens substrate obtained by reacting xylylene diisocyanate and mercaptomethyldithianeoctainedithiol (refractive index: 1.67) hereinafter referred to as "lens substrate C") was used as a lens substrate instead of the lens substrate A. The evaluation results of the properties thereof are shown in Table 1.

Example 18

A coating composition was prepared in the same manner as in Example 1 except that two kinds of the component (i), i.e., 3.35 parts by mass of bis(triethoxysilyl)ethane represented by the general formula (2) (3.0% by mol based on the components (i), (ii) and (iii)) in addition to 66. 45 parts by mass of γ-glycidoxypropyltrimethoxysilane represented by the general formula (1) as the component (i) (89.4%bymolbased on the components (i), (ii) and (iii)), were used, and a cured film and an antireflection film were formed on the lens substrate A in the same procedures as in Example 1. The evaluation results of the properties thereof are shown in Table 1.

Example 19

A cured film and an antireflection film were formed in the same procedures as in Example 18 except that the lens substrate B was used as a lens substrate instead of the lens substrate A. The evaluation results of the properties thereof are shown in Table 1.

Example 20

A coating composition was prepared in the same manner as in Example 1 except that two kinds of the component (i), i.e., 3.44 parts by mass of bis(trimethoxysilyl)ethane represented by the general formula (2) (4.0% by mol based on the components (i), (ii) and (iii)) in addition to 66.36 parts by mass of γ-glycidoxypropyltrimethoxysilane represented by the general formula (1) as the component (i) (88. 4% by mol based on the components (i), (ii) and (iii)), were used, and a cured film and an antireflection film were formed on the lens substrate A in the same procedures as in Example 1. The evaluation results of the properties thereof are shown in Table 1.

Example 21

A cured film and an antireflection film were formed in the same procedures as in Example 20 except that the

lens substrate B was used as a lens substrate instead of the lens substrate A. The evaluation results of the properties thereof are shown in Table 1.

Comparative Example 1

A coating composition was prepared in the same manner as in Example 1 except that γ-aminopropyltriethoxysilane and γ-isocyanatopropyltriethoxysilane were not used, but 75.5 parts by mass of γ-glycidoxypropyltrimethoxysilane (100% by mol based on the components (i), (ii) and (iii)) was used as a silane coupling agent, and a cured film and an antireflection film were formed on the lens substrate A in the same procedures as in Example 1. The evaluation results of the properties thereof are shown in Table 1.

Comparative Example 2

A cured film and an antireflection film were formed in the same procedures as in Comparative Example 1 except that the lens substrate B was used as a lens substrate instead of the lens substrate A. The evaluation results of the properties thereof are shown in Table 1.

Comparative Example 3

A coating composition was prepared in the same manner as in Example 1 except that γ-aminopropyltriethoxysilane was not used, but 5.7 parts by mass of γ-isocyanatopropyltriethoxysilane (7.2% by mol based on the components (i), (ii) and (iii)) and 69.8 parts by mass of γ-glycidoxypropyltrimethoxysilane (92.8% by mol based on the components (i), (ii) and (iii)) were used as a silane coupling agent, and a cured film and an antireflection film were formed on the lens substrate A in the same procedures as in Example 1. The evaluation results of the properties thereof are shown in Table 1.

Comparative Example 4

A cured film and an antireflection film were formed in the same procedures as in Comparative Example 3 except that the lens substrate B was used as a lens substrate instead of the lens substrate A. The evaluation results of the properties thereof are shown in Table 1.

Comparative Example 5

A coating composition was prepared in the same manner as in Example 1 except that γ-isocyanatopropyltriethoxysilane was not used, but 5.7 parts by mass of γ-aminopropyltriethoxysilane (8.0% by mol based on the components (i), (ii) and (iii)) and 69.8 parts by mass of γ-glycidoxypropyltrimethoxysilane (92.0% by mol based on the components (i), (ii) and (iii)) were used as a silane coupling agent, and a cured film and an antireflection film were formed on the lens substrate A in the same procedures as in Example 1. The evaluation results of the properties thereof are shown in Table 1.

Comparative Example 6

A cured film and an antireflection film were formed in the same procedures as in Comparative Example 5 except that the lens substrate B was used as a lens substrate instead of the lens substrate A. The evaluation results of the properties thereof are shown in Table 1.

Comparative Example 7

A coating composition was prepared in the same manner as in Example 1 except that γ-glycidoxypropyltrimethoxysilane was not used, but 35.6 parts by mass of γ-aminopropyltriethoxysilane (50.0% by mol based on the components (i), (ii) and (iii)) and 39.9 parts by mass of γ-isocyanatopropyltriethoxysilane (50.0% by mol based on the components (i), (ii) and (iii)) were used as a silane coupling agent, and a cured film and an antireflection film were formed on the lens substrate A in the same procedures as in Example 1. The evaluation results of the properties thereof are shown in Table 1.

Comparative Example 8

A cured film and an antireflection film were formed in the same procedures as in Comparative Example 7 except that the lens substrate B was used as a lens substrate instead of the lens substrate A. The evaluation results of the properties thereof are shown in Table 1.

Table 1

| | Substrate | Hard coat composition | | | | Adhesion | | Abrasion resistance | | Transparency | | Crack |
|---|---|---|---|---|---|---|---|---|---|---|---|---|
| | | Component (i) | | Component (ii) | Component (iii) | | | | | | | |
| | | (1) | (2) | (3) | (4) | Cured film | Antireflection film | Cured film | Antireflection film | Cured film | Antireflection film | Cured film |
| Example 1 | A | 92.4 mol% | 0 mol% | 3.8 mol% | 3.8 mol% | AA | AA | AA | AA | AA | AA | AA |
| Example 2 | B | 92.4 mol% | 0 mol% | 3.8 mol% | 3.8 mol% | AA | AA | AA | AA | AA | AA | AA |
| Example 3 | A | 92.4 mol% | 0 mol% | 3.8 mol% | 3.8 mol% | AA | AA | AA | AA | AA | AA | AA |
| Example 4 | B | 92.4 mol% | 0 mol% | 3.8 mol% | 3.8 mol% | AA | AA | AA | AA | AA | AA | AA |
| Example 5 | A | 92.4 mol% | 0 mol% | 3.8 mol% | 3.8 mol% | AA | AA | AA | AA | AA | AA | AA |
| Example 6 | B | 92.4 mol% | 0 mol% | 3.8 mol% | 3.8 mol% | AA | AA | AA | AA | AA | AA | AA |
| Example 7 | A | 92.4 mol% | 0 mol% | 3.8 mol% | 3.8 mol% | AA | AA | AA | AA | AA | AA | AA |
| Example 8 | B | 92.4 mol% | 0 mol% | 3.8 mol% | 3.8 mol% | AA | AA | AA | AA | AA | AA | AA |
| Example 9 | A | 92.4 mol% | 0 mol% | 3.8 mol% | 3.8 mol% | AA | AA | AA | AA | AA | AA | AA |
| Example 10 | B | 92.4 mol% | 0 mol% | 3.8 mol% | 3.8 mol% | AA | AA | AA | AA | AA | AA | AA |
| Example 11 | A | 90.0 mol% | 0 mol% | 5.0 mol% | 5.0 mol% | AA | AA | AA | AA | AA | AA | AA |
| Example 12 | B | 90.0 mol% | 0 mol% | 5.0 mol% | 5.0 mol% | AA | AA | AA | AA | AA | AA | AA |
| Example 13 | A | 92.0 mol% | 0 mol% | 4.0 mol% | 4.0 mol% | AA | AA | AA | AA | AA | AA | AA |

(continued)

| | Substrate | Hard coat composition | | | | Adhesion | | Abrasion resistance | | Transparency | | Crack |
|---|---|---|---|---|---|---|---|---|---|---|---|---|
| | | Component (i) | | Component (ii) | Component (iii) | | | | | | | |
| | | (1) | (2) | (3) | (4) | Cured film | Antireflection film | Cured film | Antireflection film | Cured film | Antireflection film | Cured film |
| Example 14 | B | 92.0 mol% | 0 mol% | 4.0 mol% | 4.0 mol% | AA | AA | AA | AA | AA | AA | AA |
| Example 15 | A | 94.0 mol% | 0 mol% | 3.0 mol% | 3.0 mol% | AA | AA | AA | AA | AA | AA | AA |
| Example 16 | B | 94.0 mol% | 0 mol% | 3.0 mol% | 3.0 mol% | AA | AA | AA | AA | AA | AA | AA |
| Example 17 | C | 92.4 mol% | 0 mol% | 3.8 mol% | 3.8 mol% | AA | AA | AA | AA | AA | AA | AA |
| Example 18 | A | 89.4 mol% | 3.0 mol% | 3.8 mol% | 3.8 mol% | AA | AA | AA | AA | AA | AA | AA |
| Example 19 | B | 89.4 mol% | 3.0 mol% | 3.8 mol% | 3.8 mol% | AA | AA | AA | AA | AA | AA | AA |
| Example 20 | A | 88.4 mol% | 4.0 mol% | 3.8 mol% | 3.8 mol% | AA | AA | AA | AA | AA | AA | AA |
| Example 21 | B | 88.4 mol% | 4.0 mol% | 3.8 mol% | 3.8 mol% | AA | AA | AA | AA | AA | AA | AA |
| Comparative Example 1 | A | 100.0 mol% | 0 mol% | 0 mol% | 0 mol% | C | C | AA | AA | AA | AA | B |
| Comparative Example 2 | B | 100.0 mol% | 0 mol% | 0 mol% | 0 mol% | C | C | AA | AA | AA | AA | B |
| Comparative Example 3 | A | 92.8 mol% | 0 mol% | 0 mol% | 7.2 mol% | B | B | A | A | B | B | AA |
| Comparative Example 4 | B | 92.8 mol% | 0 mol% | 0 mol% | 7.2 mol% | B | B | A | A | B | B | AA |
| Comparative Example 5 | A | 92.0 mol% | 0 mol% | 8.0 mol% | 0 mol% | B | B | A | A | B | B | AA |

(continued)

| | Substrate | Hard coat composition | | | | Adhesion | | Abrasion resistance | | Transparency | | Crack |
|---|---|---|---|---|---|---|---|---|---|---|---|---|
| | | Component (i) | | Component (ii) | Component (iii) | | | | | | | |
| | | (1) | (2) | (3) | (4) | Cured film | Antireflection film | Cured film | Antireflection film | Cured film | Antireflection film | Cured film |
| Comparative Example 6 | B | 92.0 mol% | 0 mol% | 8.0 mol% | 0 mol% | B | B | A | A | B | B | AA |
| Comparative Example 7 | A | 0 mol% | 0 mol% | 50.0 mol% | 50.0 mol% | AA | AA | B | B | AA | AA | AA |
| Comparative Example 8 | B | 0 mol% | 0 mol% | 50.0 mol% | 50.0 mol% | AA | AA | B | B | AA | AA | AA |

Example 22

(1) Production of Coating Composition

50 parts by mass of diacetone alcohol (DAA) and 50 parts by mass of propylene glycol monomethyl ether (PGM) as a solvent and 5.2 parts by mass of β-aminoethylaminopropyltriethoxysilane as the component (ii) were mixed in an atmosphere at 5°C. 9.8 parts by mass of γ-isocyanatopropyltriethoxysilane as the component (iii) was added dropwise to the mixed solution under stirring, followed by stirring for 24 hours. Subsequently, 60.0 parts by mass of γ-glycidoxypropyltrimethoxysilane as the component (i) was mixed therewith, and 17.6 parts by mass of 0.01 mol/L hydrochloric acid was then added dropwise thereto under stirring, followed by stirring for 48 hours. According to the operation, a hydrolysate of an organosilicon compound was obtained.

187 parts by mass of a modified zirconium oxide-stannic oxide composite methanol sol as s sol component and 99.1 parts by mass of propylene glycol monomethyl ether (PGM) were mixed, followed by stirring for 1 hour, in an atmosphere at 5°C. Thereafter, the hydrolysate of an organosilicon compound prepared above was added dropwise thereto under stirring, followed by stirring for 1 hour. Subsequently, 0.25 part by mass of a silicone surfactant (Y-7006, a trade name, produced by Dow Corning Toray Co. , Ltd.) and 7. 5 parts by mass of aluminum trisacetylacetnate as a curing agent were added sequentially thereto, followed by stirring for 150 hours. The resulting solution was filtered with a 0. 5-μm filter to provide a coating composition.

(2) Formation of Cured Film

A cured film was formed in the same manner as in Example 1 except that the lens substrate B was used instead of the lens substrate A. The evaluation results of the properties thereof are shown in Table 2.

(3) Formation of Antireflection Film

An antireflection film was formed in the same manner as in Example 1. The evaluation results of the properties thereof are shown in Table 2.

Example 23

A cured film and an antireflection film were formed in the same procedures as in Example 22 except that the lens substrate A was used as a lens substrate instead of the lens substrate B. The evaluation results of the properties thereof are shown in Table 2.

Example 24

A cured film and an antireflection film were formed in the same procedures as in Example 22 except that HOYA EYAS (a trade name, produced by HOYA Corporation, refractive index (ne) : 1.60, hereinafter referred to as "lens substrate D") was used as a lens substrate instead of the lens substrate B. The evaluation results of the properties thereof are shown in Table 2.

Example 25

A cured film and an antireflection film were formed in the same procedures as in Example 22 except that HOYA Phoenix (a trade name, produced by HOYA Corporation, refractive index (ne) : 1.53, hereinafter referred to as "lens substrate E") was used as a lens substrate instead of the lens substrate B. The evaluation results of the properties thereof are shown in Table 2.

Example 26

A cured film and an antireflection film were formed in the same procedures as in Example 22 except that HOYA Hi-Lux (a trade name, produced by HOYA Corporation, refractive index (ne) : 1.50, hereinafter referred to as "lens substrate F") was used as a lens substrate instead of the lens substrate B. The evaluation results of the properties thereof are shown in Table 2.

Example 27

A coating composition was prepared in the same manner as in Example 22 except that 1.9 parts by mass of tetraethylenepentamine was used instead of 5.2 parts by mass of β-aminoethylaminopropyltriethoxysilane as the component (ii), and 13.1 parts by mass of γ-isocyanatopropyltriethoxysilane as the component (iii) and 17.2 parts by mass of 0.01 mol/L hydrochloric acid were used, and a cured film and an antireflection film were formed. The evaluation results of the properties thereof are shown in Table 2.

Example 28

A cured film and an antireflection film were formed in the same procedures as in Example 27 except that the lens substrate A was used as a lens substrate instead of the lens substrate B. The evaluation results of the properties thereof are shown in Table 2.

Example 29

A cured film and an antireflection film were formed in the same procedures as in Example 27 except that the lens substrate D was used as a lens substrate instead of the lens substrate B. The evaluation results of the properties thereof are shown in Table 2.

Example 30

A cured film and an antireflection film were formed in the same procedures as in Example 27 except that the lens substrate E was used as a lens substrate instead of the lens substrate B. The evaluation results of the properties thereof are shown in Table 2.

Example 31

A cured film and an antireflection film were formed in the same procedures as in Example 27 except that the lens substrate F was used as a lens substrate instead of the lens substrate B. The evaluation results of the properties thereof are shown in Table 2.

Example 32

1.7 parts by mass of ethylene glycol as the component (ii) was added dropwise to 13.3 parts by mass of γ-isocyanatopropyltriethoxysilane as the component (iii) under stirring, followed by stirring for 1 hour, in an atmosphere at 40°C. 0.0075 part by mass of di-n-butyltin dilaurate as a curing agent was added to solution, followed by stirring for 24 hours. 50 parts by mass of diacetone alcohol (DAA) and 50 parts by mass of propylene glycol monomethyl ether (PGM) as a solvent were added thereto, and after setting the temperature to 5°C, 60.0 parts by mass of γ-glycidoxypropyltrimethoxysilane as the component (i) was then further mixed thereto. 17.3 parts by mass of 0.01 mol/L hydrochloric acid was added dropwise thereto under stirring, followed by stirring for 48 hours. According to the operation, a hydrolysate of an organosilicon compound was obtained.

187 parts by mass of a modified zirconium oxide-stannic oxide composite methanol sol as a sol component and 99.1 parts by mass of propylene glycol monomethyl ether (PGM) were mixed, followed by stirring for 1 hour, in an atmosphere at 5°C. Thereafter, the hydrolysate of an organosilicon compound prepared above was added dropwise thereto under stirring, followed by stirring for 1 hour. Subsequently, 0.25 part by mass of a silicone surfactant (Y-7006, a trade name, produced by Dow Corning Toray Co. , Ltd.) and 7.5 parts by mass of aluminum trisacetylacetylacetnate as a curing agent were added sequentially thereto, followed by stirring for 150 hours. The resulting solution was filtered with a 0. 5-μm filter to provide a coating composition.

A cured film and an antireflection film were formed in the same procedures as in Example 22. The evaluation results of the properties thereof are shown in Table 2.

Example 33

A cured film and an antireflection film were formed in the same procedures as in Example 32 except that the lens substrate A was used as a lens substrate instead of the lens substrate B. The evaluation results of the properties thereof are shown in Table 2.

Example 34

A cured film and an antireflection film were formed in the same procedures as in Example 32 except that the lens substrate D was used as a lens substrate instead of the lens substrate B. The evaluation results of the properties thereof are shown in Table 2.

Example 35

A cured film and an antireflection film were formed in the same procedures as in Example 32 except that the lens substrate E was used as a lens substrate instead of the lens substrate B. The evaluation results of the properties thereof are shown in Table 2.

Example 36

A cured film and an antireflection film were formed in the same procedures as in Example 32 except that the lens substrate F was used as a lens substrate instead of the lens substrate B. The evaluation results of the properties thereof are shown in Table 2.

Example 37

A coating composition was prepared in the same manner as in Example 32 except that 6.6 parts by mass of γ-mercaptopropyltrimethoxysilane was used instead of 1.7 parts by mass of ethylene glycol as the component (ii), and 8. 4 parts by mass of γ-isocyanatopropyltriethoxysilane as the component (iii) and 18.1 parts by mass of 0.01 mol/L hydrochloric acid were used, and a cured film and an antireflection film were formed. The evaluation results of the properties thereof are shown in Table 2.

Example 38

A cured film and an antireflection film were formed in the same procedures as in Example 37 except that the lens substrate A was used as a lens substrate instead of the lens substrate B. The evaluation results of the properties thereof are shown in Table 2.

Example 39

A cured film and an antireflection film were formed in the same procedures as in Example 37 except that the lens substrate D was used as a lens substrate instead of the lens substrate B. The evaluation results of the properties thereof are shown in Table 2.

Example 40

A cured film and an antireflection film were formed in the same procedures as in Example 37 except that the lens substrate E was used as a lens substrate instead of the lens substrate B. The evaluation results of the properties thereof are shown in Table 2.

Example 41

A cured film and an antireflection film were formed in the same procedures as in Example 37 except that the lens substrate F was used as a lens substrate instead of the lens substrate B. The evaluation results of the properties thereof are shown in Table 2.

Example 42

A coating composition was prepared in the same manner as in Example 32 except that 4.5 parts by mass of bismercaptomethyldithiane was used instead of 1.7 parts by mass of ethylene glycol as the component (ii), and 10.5 parts by mass of γ-isocyanatopropyltriethoxysilane as the component (iii) and 16.6 parts by mass of 0.01 mol/L hydrochloric acid were used, and a cured film and an antireflection film were formed. The evaluation results of the properties thereof are shown in Table 2.

Example 43

A cured film and an antireflection film were formed in the same procedures as in Example 42 except that the lens substrate A was used as a lens substrate instead of the lens substrate B. The evaluation results of the properties thereof are shown in Table 2.

Example 44

A cured film and an antireflection film were formed in the same procedures as in Example 42 except that the lens substrate D was used as a lens substrate instead of the lens substrate B. The evaluation results of the properties thereof are shown in Table 2.

Example 45

A cured film and an antireflection film were formed in the same procedures as in Example 42 except that the lens substrate E was used as a lens substrate instead of the lens substrate B. The evaluation results of the properties thereof are shown in Table 2.

Example 46

A cured film and an antireflection film were formed in the same procedures as in Example 42 except that the lens substrate F was used as a lens substrate instead of the lens substrate B. The evaluation results of the properties thereof are shown in Table 2.

Example 47

A coating composition was prepared in the same manner as in Example 22 except that 10.9 parts by mass of γ-aminopropyltriethoxysilane was used instead of 5.2 parts by mass of β-aminoethylaminopropyltriethoxysilane as the component (ii), 4.13 parts by mass of hexamethylene diisocyanate was used instead of 9.8 parts by mass of γ-isocyanatopropyltriethoxysilane as the component (iii), and 18.7 parts by mass of 0.01 mol/L hydrochloric acid was used, and a cured film and an antireflection film were formed. The evaluation results of the properties thereof are shown in Table 2.

Example 48

A cured film and an antireflection film were formed in the same procedures as in Example 47 except that the lens substrate A was used as a lens substrate instead of the lens substrate B. The evaluation results of the properties thereof are shown in Table 2.

Example 49

A cured film and an antireflection film were formed in the same procedures as in Example 47 except that the lens substrate D was used as a lens substrate instead of the lens substrate B. The evaluation results of the properties thereof are shown in Table 2.

Example 50

A cured film and an antireflection film were formed in the same procedures as in Example 47 except that the lens substrate E was used as a lens substrate instead of the lens substrate B. The evaluation results of the properties thereof are shown in Table 2.

Example 51

A cured film and an antireflection film were formed in the same procedures as in Example 47 except that the lens substrate F was used as a lens substrate instead of the lens substrate B. The evaluation results of the properties thereof are shown in Table 2.

Example 52

A coating composition was prepared in the same manner as in Example 32 except that 10.5 parts by mass of γ-mercaptopropyltrimethoxysilane was used instead of 1.7 parts by mass of ethylene glycol as the component (ii), 4.5 parts by mass of hexamethylene diisocyanate was used instead of 13. 3 parts by mass of γ-isocyanatopropyltriethoxysilane as the component (iii), and 17.3 parts by mass of 0.01 mol/L hydrochloric acid was used, and a cured film and an antireflection film were formed. The evaluation results of the properties thereof are shown in Table 2.

Example 53

A cured film and an antireflection film were formed in the same procedures as in Example 52 except that the lens substrate A was used as a lens substrate instead of the lens substrate B. The evaluation results of the properties thereof are shown in Table 2.

Example 54

A cured film and an antireflection film were formed in the same procedures as in Example 52 except that the lens substrate D was used as a lens substrate instead of the lens substrate B. The evaluation results of the properties thereof are shown in Table 2.

Example 55

A cured film and an antireflection film were formed in the same procedures as in Example 52 except that the lens substrate E was used as a lens substrate instead of the lens substrate B. The evaluation results of the properties thereof are shown in Table 2.

Example 56

A cured film and an antireflection film were formed in the same procedures as in Example 52 except that the lens substrate F was used as a lens substrate instead of the lens substrate B. The evaluation results of the properties thereof are shown in Table 2.

Example 57

A coating composition was prepared in the same manner as in Example 22 except that a modified titanium oxide-silicon oxide-zirconium oxide composite methanol sol (OPT LAKE 1130Z, a trade name, produced by JGC Catalysts and Chemicals Ltd.) was used instead of 187 parts by mass of the modified zirconium oxide-stannic oxide composite methanol sol, and a cured film and an antireflection film were formed. The evaluation results of the properties thereof are shown in Table 2.

Example 58

A cured film and an antireflection film were formed in the same procedures as in Example 57 except that the lens substrate A was used as a lens substrate instead of the lens substrate B. The evaluation results of the properties thereof are shown in Table 2.

Example 59

A cured film and an antireflection film were formed in the same procedures as in Example 57 except that the lens substrate D was used as a lens substrate instead of the lens substrate B. The evaluation results of the properties thereof are shown in Table 2.

Example 60

A cured film and an antireflection film were formed in the same procedures as in Example 57 except that the lens substrate E was used as a lens substrate instead of the lens substrate B. The evaluation results of the properties thereof are shown in Table 2.

Example 61

A cured film and an antireflection film were formed in the same procedures as in Example 57 except that the lens substrate F was used as a lens substrate instead of the lens substrate B. The evaluation results of the properties thereof are shown in Table 2.

Comparative Example 9

A coating composition was prepared in the same manner as in Example 22 except that β-aminoethylaminopropyltriethoxysilane and γ-isocyanatopropyltriethoxysilane were not used, but 75 parts by mass of γ-glycidoxypropyltrimethoxysilane was used as a silane coupling agent, and a cured film and an antireflection film were formed. The evaluation results of the properties thereof are shown in Table 2.

Comparative Example 10

A cured film and an antireflection film were formed in the same procedures as in Comparative Example 9 except that the lens substrate A was used as a lens substrate instead of the lens substrate B. The evaluation results of the properties thereof are shown in Table 2.

Comparative Example 11

A coating composition was prepared in the same manner as in Example 22 except that β-aminoethylaminopropyltriethoxysilane was not used, but 15 parts by mass of γ-isocyanatopropyltriethoxysilane and 60 parts by mass of γ-glycidoxypropyltrimethoxysilane were used as a silane coupling agent, and a cured film and an antireflection film were formed. The evaluation results of the properties thereof are shown in Table 2.

Comparative Example 12

A cured film and an antireflection film were formed in the same procedures as in Comparative Example 11 except that the lens substrate A was used as a lens substrate instead of the lens substrate B. The evaluation results of the properties thereof are shown in Table 2.

Comparative Example 13

A coating composition was prepared in the same manner as in Example 22 except that γ-isocyanatopropyltriethoxysilane was not used, but 1 part by mass of β-aminoethylaminopropyltriethoxysilane and 74 parts by mass of γ-glycidoxypropyltrimethoxysilane were used as a silane coupling agent, and a cured film and an antireflection film were formed. The evaluation results of the properties thereof are shown in Table 2.

Comparative Example 14

A cured film and an antireflection film were formed in the same procedures as in Comparative Example 13 except that the lens substrate A was used as a lens substrate instead of the lens substrate B. The evaluation results of the properties thereof are shown in Table 2.

Comparative Example 15

A coating composition was prepared in the same manner as in Example 22 except that γ-glycidoxypropyltrimethoxysilane was not used, but 26.1 parts by mass of β-aminoethylaminopropyltriethoxysilane and 48.9 parts by mass of γ-isocyanatopropyltriethoxysilane were used as a silane coupling agent, and a cured film and an antireflection film were formed. The evaluation results of the properties thereof are shown in Table 2.

Comparative Example 16

A cured film and an antireflection film were formed in the same procedures as in Comparative Example 15 except that the lens substrate A was used as a lens substrate instead of the lens substrate B. The evaluation results of the properties thereof are shown in Table 2.

Table 2

| | Substrate | Adhesion | | Abrasion resistance | | Bayer value | | Transparency | | Crack |
|---|---|---|---|---|---|---|---|---|---|---|
| | | Cured film | Antireflection film | Cured film | Antireflection film | Cured film | Antireflection film | Cured film | Antireflection film | Cured film |
| Example 22 | B | AA | AA | AA | AA | 3 | 12 | AA | AA | AA |
| Example 23 | A | AA | AA | AA | AA | 3 | 12 | AA | AA | AA |
| Example 24 | D | AA | AA | AA | AA | 3 | 12 | AA | AA | AA |
| Example 25 | E | AA | AA | AA | AA | 3 | 12 | AA | AA | AA |
| Example 26 | F | AA | AA | AA | AA | 3 | 12 | AA | AA | AA |
| Example 27 | B | AA | AA | AA | AA | 3 | 12 | AA | AA | AA |
| Example 28 | A | AA | AA | AA | AA | 3 | 12 | AA | AA | AA |
| Example 29 | D | AA | AA | AA | AA | 3 | 12 | AA | AA | AA |
| Example 30 | E | AA | AA | AA | AA | 3 | 12 | AA | AA | AA |
| Example 31 | F | AA | AA | AA | AA | 3 | 12 | AA | AA | AA |
| Example 32 | B | AA | AA | AA | AA | 3 | 12 | AA | AA | AA |
| Example 33 | A | AA | AA | AA | AA | 3 | 12 | AA | AA | AA |
| Example 34 | D | AA | AA | AA | AA | 3 | 12 | AA | AA | AA |
| Example 35 | E | AA | AA | AA | AA | 3 | 12 | AA | AA | AA |
| Example 36 | F | AA | AA | AA | AA | 3 | 12 | AA | AA | AA |
| Example 37 | B | AA | AA | AA | AA | 3 | 12 | AA | AA | AA |
| Example 38 | A | AA | AA | AA | AA | 3 | 12 | AA | AA | AA |
| Example 39 | D | AA | AA | AA | AA | 3 | 12 | AA | AA | AA |
| Example 40 | E | AA | AA | AA | AA | 3 | 12 | AA | AA | AA |
| Example 41 | F | AA | AA | AA | AA | 3 | 12 | AA | AA | AA |
| Example 42 | B | AA | AA | AA | AA | 3 | 12 | AA | AA | AA |
| Example 43 | A | AA | AA | AA | AA | 3 | 12 | AA | AA | AA |
| Example 44 | D | AA | AA | AA | AA | 3 | 12 | AA | AA | AA |
| Example 45 | E | AA | AA | AA | AA | 3 | 12 | AA | AA | AA |

(continued)

| | Substrate | Adhesion | | Abrasion resistance | | Bayer value | | Transparency | | Crack |
|---|---|---|---|---|---|---|---|---|---|---|
| | | Cured film | Antireflection film | Cured film | Antireflection film | Cured film | Antireflection film | Cured film | Antireflection film | Cured film |
| Example 46 | F | AA | AA | AA | AA | 3 | 12 | AA | AA | AA |
| Example 47 | B | AA | AA | AA | AA | 3 | 12 | AA | AA | AA |
| Example 48 | A | AA | AA | AA | AA | 3 | 12 | AA | AA | AA |
| Example 49 | D | AA | AA | AA | AA | 3 | 12 | AA | AA | AA |
| Example 50 | E | AA | AA | AA | AA | 3 | 12 | AA | AA | AA |
| Example 51 | F | AA | AA | AA | AA | 3 | 12 | AA | AA | AA |
| Example 52 | B | AA | AA | AA | AA | 3 | 12 | AA | AA | AA |
| Example 53 | A | AA | AA | AA | AA | 3 | 12 | AA | AA | AA |
| Example 54 | D | AA | AA | AA | AA | 3 | 12 | AA | AA | AA |
| Example 55 | E | AA | AA | AA | AA | 3 | 12 | AA | AA | AA |
| Example 56 | F | AA | AA | AA | AA | 3 | 12 | AA | AA | AA |
| Example 57 | B | AA | AA | AA | AA | 3 | 12 | AA | AA | AA |
| Example 58 | A | AA | AA | AA | AA | 3 | 12 | AA | AA | AA |
| Example 59 | D | AA | AA | AA | AA | 3 | 12 | AA | AA | AA |
| Example 60 | E | AA | AA | AA | AA | 3 | 12 | AA | AA | AA |
| Example 61 | F | AA | AA | AA | AA | 3 | 12 | AA | AA | AA |
| Comparative Example 9 | B | C | C | AA | AA | 3 | 12 | AA | AA | C |
| Comparative Example 10 | A | C | C | AA | AA | 3 | 12 | AA | AA | C |
| Comparative Example 11 | B | B | B | A | A | 2.5 | 10 | B | B | AA |
| Comparative Example 12 | A | B | B | A | A | 2.5 | 10 | B | B | AA |

(continued)

| | Substrate | Adhesion | | Abrasion resistance | | Bayer value | | Transparency | | Crack |
|---|---|---|---|---|---|---|---|---|---|---|
| | | Cured film | Antireflection film | Cured film | Antireflection film | Cured film | Antireflection film | Cured film | Antireflection film | Cured film |
| Comparative Example 13 | B | B | B | A | A | 2.5 | 10 | B | B | AA |
| Comparative Example 14 | A | B | B | A | A | 2.5 | 10 | B | B | AA |
| Comparative Example 15 | B | AA | AA | B | B | 1.5 | 6 | AA | AA | AA |
| Comparative Example 16 | A | AA | AA | B | B | 1.5 | 6 | AA | AA | AA |

INDUSTRIAL APPLICABILITY

The plastic lens of the present invention is excellent in abrasion resistance, transparency and appearance, and in particular, excellent in adhesion to a cured film, with a lens containing a resin having an NHCO structure represented by the formula (A) or a resin having a unit derived from a compound represented by the formula (B) used as a substrate.

## Claims

**1.** A plastic lens comprising, as a substrate, a lens comprising a resin having an NHCO structure represented by one of the following formulae (a), (b) or (c), or a resin having a unit derived from a compound represented by the following formula (B), and a cured film having an NHCO structure formed by reacting a coating composition containing the following components (i), (ii) and (iii) directly on the substrate

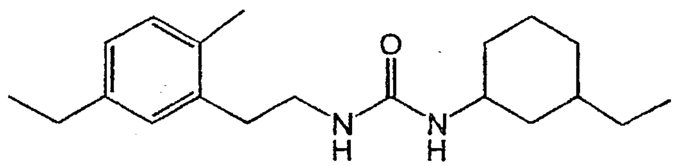

(a)

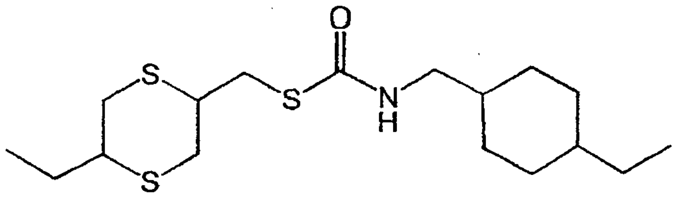

(b)

(c)

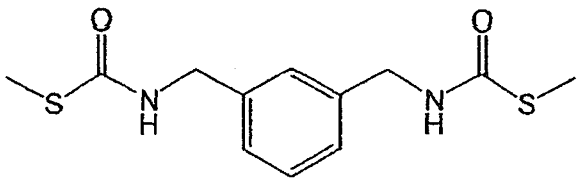

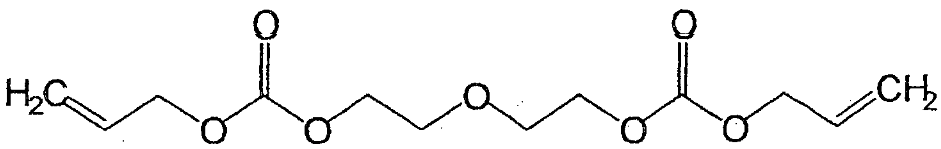

(B)

component (i):

at least one selected from an organosilicon compound represented by the following general formula (1), an organosilicon compound represented by the following general formula (2) and a hydrolysate of the organosilicon compounds:

$$R^1{}_nSi\,(OR^2)_{4-n} \qquad (1)$$

(in the formula, $R^1$ represents a monovalent hydrocarbon group having from 3 to 20 carbon atoms and having a functional group (a vinyl group, an epoxy group, a styryl group, a methacryl group or an acrylic group); $R^2$ represents an alkyl group having from 1 to 8 carbon atoms, an aryl group having from 6 to 10 carbon atoms, an aralkyl group having from 7 to 10 carbon atoms or an acyl group having from 2 to 10 carbon atoms; and n represents an integer of 1 or 2, in which when plural $R^1$ groups are present, the plural $R^1$ groups may be the same or different, and plural $OR^2$ groups may be the same or different)

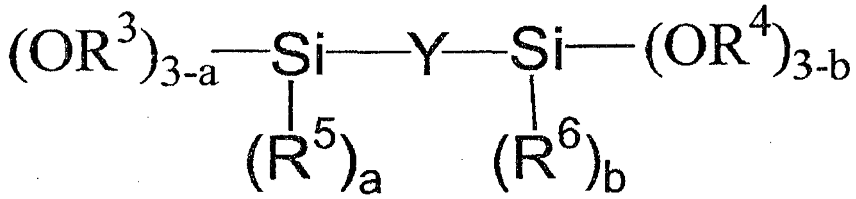

(2)

(in the formula, $R^3$ and $R^4$ each represent an alkyl group having from 1 to 4 carbon atoms or an acyl group having from 2 to 4 carbon atoms, and may be the same or different; $R^5$ and $R^6$ each represent a monovalent hydrocarbon group having from 1 to 5 carbon atoms and having or not having a functional group, and may be the same or different; Y represents a divalent hydrocarbon group having from 2 to 20 carbon atoms; and a and b each represent an integer of 0 or 1, in which plural $OR^3$ groups may be the same or different, and plural $OR^4$ groups may be the same or different),

component (ii):

at least one selected from an amino group-containing organosilicon compound represented by the following general formula (3) and a hydrolysate thereof:

$$R^7{}_nSi(OR^8)_{4-n} \quad (3)$$

(in the formula, $R^7$ represents a monovalent amino group-containing hydrocarbon group having from 1 to 20 carbon atoms; $R^8$ represents an alkyl group having from 1 to 8 carbon atoms, an aryl group having from 6 to 10 carbon atoms, an aralkyl group having from 7 to 10 carbon atoms or an acyl group having from 2 to 10 carbon atoms; and n represents an integer of 1 or 2, in which when plural $R^7$ groups are present, the plural $R^7$ groups may be the same or different, and plural $OR^8$ groups may be the same or different),

component (iii):

at least one selected from an isocyanate group-containing organosilicon compound represented by the following general formula (4) and a hydrolysate thereof:

$$R^9{}_nSi(OR^{10})_{4-n} \quad (4)$$

(in the formula, $R^9$ represents a monovalent isocyanate group-containing hydrocarbon group having from 1 to 20 carbon atoms; $R^{10}$ represents an alkyl group having from 1 to 8 carbon atoms, an aryl group having from 6 to 10 carbon atoms, an aralkyl group having from 7 to 10 carbon atoms or an acyl group having from 2 to 10 carbon atoms; and n represents an integer of 1 or 2, in which when plural $R^9$ groups are present, the plural $R^9$ groups may be the same or different, and plural $OR^{10}$ groups may be the same or different.

2. The plastic lens according to claim 1, wherein a molar ratio of the functional groups in the components (i), (ii) and (iii) is from 99/0.5/0.5 to 10/45/45.

3. The plastic lens as claimed in claim 1, wherein the organosilicon compound represented by the general formula (1) as the component (i) is a γ-glycidoxypropyltrialkoxysilane.

4. The plastic lens as claimed in claim 1, wherein the organosilicon compound represented by the general formula (3) as the component (ii) is a γ-aminopropyltrialkoxysilane.

5. The plastic lens as claimed in claim 1, wherein the organosilicon compound represented by the general formula (4) as the component (iii) is a γ-isocyanatopropyltrialkoxysilane.

6. The plastic lens as claimed in one of claims 1 to 5, wherein a molar ratio of functional groups in the components (i), (ii) and (iii) is from 95/2.5/2.5 to 80/10/10 in the coating composition.

7. The plastic lens as claimed in one of claims 1 to 6, wherein the coating composition contains a metallic oxide in a fine particle form.

**8.** The plastic lens as claimed in one of claims 1 to 7, wherein the coating composition contains modified zirconium oxide-stannic oxide complex colloid particles (C) that contain zirconium oxide-stannic oxide complex colloid particles (A2) having a structure containing colloid particles of zirconium oxide and colloid particles of stannic oxide bonded at a ratio of from 0.02 to 0.4 in terms of $SnO_2/ZnO_2$ based on the molar ratio of the oxides, having a particle diameter of from 2.5 to 100 nm, and containing amine-containing $Sb_2O_5$, as a core, having coated on the surface thereof colloid particles (B2) of a tungsten oxide-stannic oxide-silicon dioxide complex having a mass ratio $WO_3/SnO_2$ of from 0.1 to 100, a mass ratio $SiO_2/SnO_2$ of from 0.1 to 100 and a particle diameter of from 2 to 7 nm, with a mass ratio (B2) / (A2) being from 0.02 to 1 based on the mass ratio of the metal oxides thereof, and that has a particle diameter of from 2.5 to 100 nm.

**9.** The plastic lens as claimed in claim 1, wherein the substrate contains a polythiourethane lens obtained by reacting xylylene diisocyanate and polythiol, or a sulfur-containing lens obtained by reacting a lens raw material monomer containing a compound having an epithio group.

**10.** The plastic lens as claimed in claim 9, wherein in the sulfur-containing lens, the compound having an epithio group is bis(β-epithiopropyl)sulfide and/or bis(β-epithiopropyl)disulfide.

**11.** The plastic lens as claimed in claim 9, wherein in the sulfur-containing lens, an amount of the compound having an epithio group is from 60 to 90% by weight based on a total amount of the lens raw material monomers.

**12.** The plastic lens as claimed in claim 9, wherein in the polythiourethane lens having a refractive index of from 1.65 to 1.69 obtained by reacting xylylene diisocyanate and polythiol, mercaptomethyldithiaoctanedithiol and/or bis(mercaptomethyl)trithiaundecanedithiol are used as a component of the polythiol.

**13.** The plastic lens as claimed in one of claims 9 to 12, wherein the polythiourethane lens has a refractive index of from 1.65 to 1.69 and/or the sulfur-containing lens has a refractive index of from 1.69 to 1.72.

**Patentansprüche**

**1.** Kunststofflinse, umfassend, als ein Substrat, eine Linse, umfassend ein Harz mit einer NHCO-Struktur, dargestellt durch eine der folgenden Formeln (a), (b) oder (c), oder ein Harz mit einer Einheit, abgeleitet von einer durch die folgende Formel (B) dargestellten Verbindung, sowie einen gehärteten Film mit einer NHCO-Struktur, gebildet durch Umsetzen einer Beschichtungszusammensetzung, enthaltend die folgenden Komponenten (i), (ii) und (iii) direkt auf dem Substrat

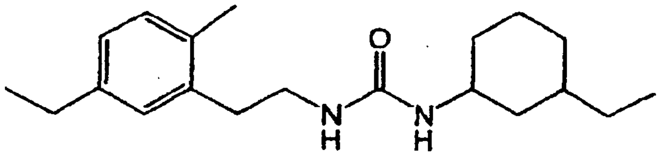

(a)

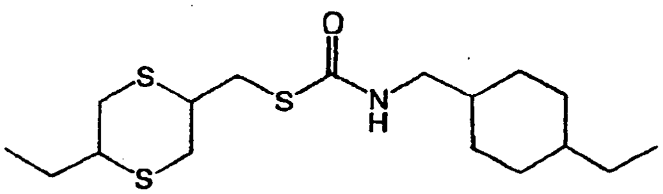

(b)

(c)

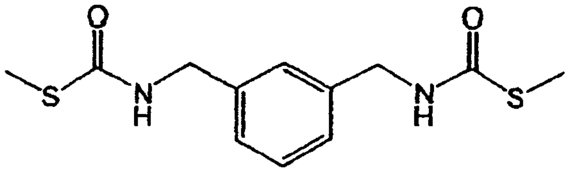

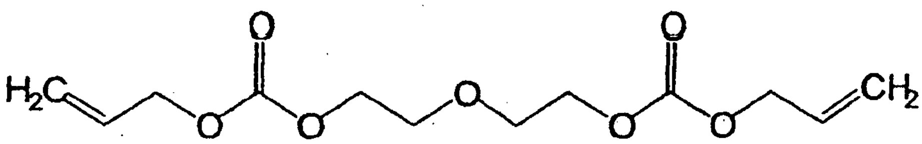

(B)

Komponente (i):

wenigstens eine, ausgewählt aus einer Organosiliciumverbindung, dargestellt durch die folgende allgemeine Formel (1), einer Organosiliciumverbindung, dargestellt durch die folgende allgemeine Formel (2), und einem Hydrolysat der Organosiliciumverbindungen:

$$R^1{}_nSi(OR^2)_{4-n} \qquad (1)$$

(in der Formel stellt $R^1$ eine einwertige Kohlenwasserstoffgruppe mit 3 bis 20 Kohlenstoffatomen und mit einer funktionellen Gruppe (einer Vinylgruppe, einer Epoxygruppe, einer Styrylgruppe, einer Methacrylgruppe oder einer Acrylgruppe) dar; $R^2$ stellt eine Alkylgruppe mit 1 bis 8 Kohlenstoffatomen, eine Arylgruppe mit 6 bis 10 Kohlenstoffatomen, eine Aralkylgruppe mit 7 bis 10 Kohlenstoffatomen oder eine Acylgruppe mit 2 bis 10 Kohlenstoffatomen dar; und n stellt eine ganze Zahl von 1 oder 2 dar, wobei, sofern mehrere Gruppen $R^1$ anwesend sind, die mehreren Gruppen $R^1$ gleich oder verschieden sein können, und mehrere Gruppen $OR^2$ gleich oder verschieden sein können),

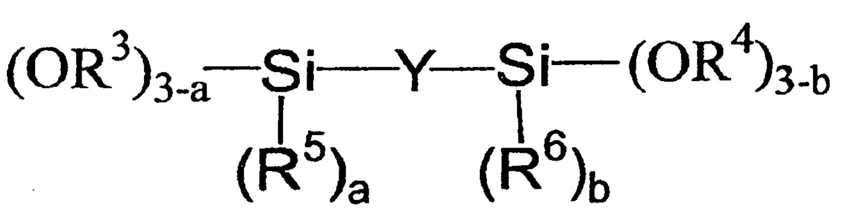

(2)

(in der Formel stellen $R^3$ und $R^4$ jeweils unabhängig eine Alkylgruppe mit 1 bis 4 Kohlenstoffatomen oder eine Acylgruppe mit 2 bis 4 Kohlenstoffatomen dar, und können gleich oder verschieden sein; $R^5$ und $R^6$ stellen jeweils eine einwertige Kohlenwasserstoffgruppe mit 1 bis 5 Kohlenstoffatomen und mit oder ohne einer funktionellen Gruppe dar, und können gleich oder verschieden sein; Y stellt eine zweiwertige Kohlenwasserstoffgruppe mit 2 bis 20 Kohlenstoffatomen dar; und a und b stellen jeweils eine ganze Zahl von 0 oder 1 dar, wobei mehrere Gruppen $OR^3$ gleich oder verschieden sein können, und mehrere Gruppen $OR^4$ gleich oder verschieden sein können),

Komponente (ii):

wenigstens eine, ausgewählt aus einer aminogruppenhaltigen Organosiliciumverbindung, dargestellt durch die folgende allgemeine Formel (3) und einem Hydrolysat davon:

$$R^7_nSi(OR^8)_{4-n} \qquad (3)$$

(in der Formel stellt $R^7$ eine monovalente aminogruppenhaltige Kohlenwasserstoffgruppe mit 1 bis 20 Kohlenstoffatomen dar; $R^8$ stellt eine Alkylgruppe mit 1 bis 8 Kohlenstoffatomen dar, eine Arylgruppe mit 6 bis 10 Kohlenstoffatomen, eine Aralkylgruppe mit 7 bis 10 Kohlenstoffatomen oder eine Acylgruppe mit 2 bis 10 Kohlenstoffatomen; und n stellt eine ganze Zahl von 1 oder 2 dar, wobei, wenn mehrere Gruppen $R^7$ anwesend sind, die mehreren Gruppen $R^7$ gleich oder verschieden sein können, und mehrere Gruppen $OR^8$ gleich oder verschieden sein können),

Komponente (iii):

wenigstens eine, ausgewählt aus einer isocyanatgruppenhaltigen Organosiliciumverbindung, dargestellt durch die folgende allgemeine Formel (4) und einem Hydrolysat davon:

$$R^9_nSi(OR^{10})_{4-n} \qquad (4)$$

(in der Formel stellt $R^9$ eine einwertige isocyanatgruppenhaltige Kohlenwasserstoffgruppe mit 1 bis 20 Kohlenstoffatomen dar; $R^{10}$ stellt eine Alkylgruppe mit 1 bis 8 Kohlenstoffatomen, eine Arylgruppe mit 6 bis 10 Kohlenstoffatomen, eine Aralkylgruppe mit 7 bis 10 Kohlenstoffatomen oder eine Acylgruppe mit 2 bis 10 Kohlenstoffatomen dar; und n stellt eine ganze Zahl von 1 oder 2 dar, wobei, sofern mehrere Gruppen $R^9$ anwesend sind, die mehreren Gruppen $R^9$ gleich oder verschieden sein können, und mehrere Gruppen $OR^{10}$ gleich oder verschieden sein können).

**2.** Kunststofflinse gemäß Anspruch 1, wobei das molare Verhältnis der funktionellen Gruppen in den Komponenten (i), (ii) und (iii) von 99/0,5/0,5 bis 10/45/45 beträgt.

**3.** Kunststofflinse gemäß Anspruch 1, wobei die Organosiliciumverbindung, dargestellt durch die allgemeine Formel (1) als die Komponente (i) ein γ-Glycidoxypropyltrialkoxysilan ist.

**4.** Kunststofflinse gemäß Anspruch 1, wobei die Organosiliciumverbindung, dargestellt durch die allgemeine Formel (3) als die Komponente (ii) ein γ-Aminopropyltrialkoxysilan ist.

**5.** Kunststofflinse gemäß Anspruch 1, wobei durch die allgemeine Formel (4) dargestellte Organosiliciumverbindung als die Komponente (iii) ein γ-Isocyanatpropyltrialkoxysilan ist.

**6.** Kunststofflinse gemäß einem der Ansprüche 1 bis 5, wobei das molare Verhältnis der funktionellen Gruppen in den Komponenten (i), (ii) und (iii) von 95/2,5/2,5 bis 80/10/10 in der Beschichtungszusammensetzung beträgt.

**7.** Kunststofflinse gemäß einem der Ansprüche 1 bis 6, wobei die Beschichtungszusammensetzung ein Metalloxid in Feinpartikelform enthält.

**8.** Kunststofflinse gemäß einem der Ansprüche 1 bis 7, wobei die Beschichtungszusammensetzung kolloide modifizierte Zirconiumoxid-Zinnoxid-Komplexpartikel (C) enthält, welche kolloide Zirconiumuoxid-Zinnoxid-Komplexpartikel (A2) mit einer Struktur, welche kolloide Partikel von Zirconiumoxid und kolloide Partikel von Zinnoxid, welche mit einem Verhältnis von 0,02 bis 0,4 bezüglich $SnO_2/ZnO_2$, bezogen auf das molare Verhältnis der Oxide, gebunden sind, und zwar mit einem Partikeldurchmesser von 2,5 bis 100 nm, und enthaltend aminhaltiges $Sb_2O_5$ als Kern, mit einem Überzug auf der Oberfläche davon mit kolloiden Partikeln (B2) eines Wolframoxid-Zinnoxid-Siliciumdioxidkomplexes mit einem Massenverhältnis $WO_3/SnO_2$ von 0,1 bis 100, einem Massenverhältnis $SiO_2/SnO_2$ von 0, 1 bis 100 und einem Partikeldurchmesser von 2 bis 7 nm, mit einem Massenverhältnis (B2)/(A2), welches von 0,02 bis 1 beträgt, bezogen auf das Massenverhältnis der Metalloxide davon, und einen Partikeldurchmesser von 2,5 bis 100 nm aufweist.

**9.** Kunststofflinse gemäß Anspruch 1, wobei das Substrat eine Polythiourethanlinse enthält, erhalten durch Umsetzen von Xylylendiisocyanat und Polythiol, oder eine schwefelhaltige Linse, erhalten durch Umsetzen eines Linsenrohmaterialmonomers, enthaltend eine Verbindung mit einer Epithiogruppe.

**10.** Kunststofflinse gemäß Anspruch 9, wobei in der schwefelhaltigen Linse die Verbindung mit einer Epithiogruppe Bis(β-epithiopropyl)sulfid und/oder Bis(β-epithiopropyl)disulfid ist.

**11.** Kunststofflinse gemäß Anspruch 9, wobei in der schwefelhaltigen Kunststofflinse die Menge der Verbindung mit einer Epithiogruppe 60 bis 90 Gew.-% beträgt, bezogen auf die Gesamtmenge der Linsenrohmaterialmonomere.

**12.** Kunststofflinse gemäß Anspruch 9, wobei in der Polyurethanlinse mit einem Brechungsindex von 1,65 bis 1,69, erhalten durch Umsetzen von Xylylendiisocyanat und Polythiol, Mercaptomethyldithiaoctandithiol und/oder Bis(mercaptomethyl)trithiaundecandithiol als Komponente des Polythiols verwendet werden.

**13.** Kunststofflinse gemäß einem der Ansprüche 9 bis 12, wobei die Polythiourethanlinse einen Brechungsindex von 1,65 bis 1,69 und/oder die schwefelhaltige Linse einen Brechungsindex von 1,69 bis 1,72 aufweist.

## Revendications

**1.** Lentille plastique comprenant, comme substrat, une lentille comprenant une résine ayant une structure NHCO représentée par l'une des formules (a), (b) ou (c) suivantes, ou une résine ayant un motif dérivé d'un composé représenté par la formule (B) suivante, et un film durci ayant une structure NHCO formée par réaction d'une composition de revêtement contenant les composants (i), (ii) et (iii) suivants directement sur le substrat

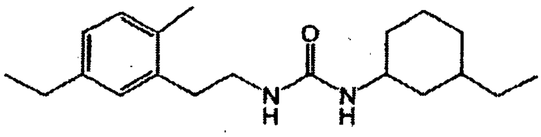

(a)

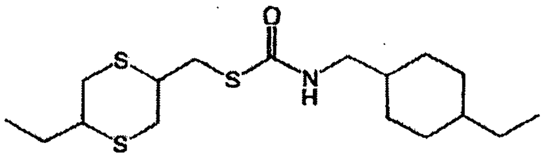

(b)

(c)

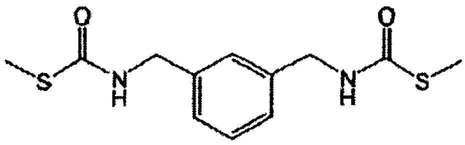

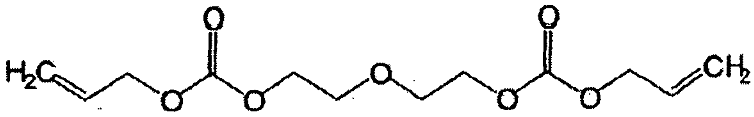

(B)

composant (i) :

au moins un élément choisi parmi un composé organosilicium représenté par la formule générale (1) suivante, un composé organosilicium représenté par la formule générale (2) suivante et un hydrolysat des composés organosilicium :

$$R^1_nSi(OR^2)_{4-n} \qquad (1)$$

(dans la formule, $R^1$ représente un groupe hydrocarbure monovalent comportant de 3 à 20 atomes de carbone et comportant un groupe fonctionnel (un groupe vinyle, un groupe époxy, un groupe styryle, un groupe méthacryle ou un groupe acrylique) ; $R^2$ représente un groupe alkyle comportant de 1 à 8 atomes de carbone, un groupe aryle comportant de 6 à 10 atomes de carbone, un groupe aralkyle comportant de 7 à 10 atomes de carbone ou un groupe acyle comportant de 2 à 10 atomes de carbone ; et n représente un nombre entier de 1 ou 2, dans lequel lorsque plusieurs groupes $R^1$ sont présents, les plusieurs groupes $R^1$ peuvent être identiques ou différents, les plusieurs groupes $OR^2$ peuvent être identiques ou différents)

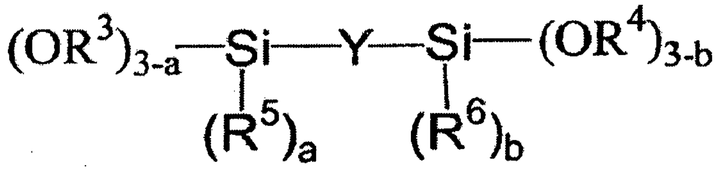

(2)

(dans la formule, $R^3$ et $R^4$ représentent chacun un groupe alkyle comportant de 1 à 4 atomes de carbone ou un groupe acyle comportant de 2 à 4 atomes de carbone, ils peuvent être identiques ou différents ; $R^5$ et $R^6$ représentent chacun un groupe hydrocarbure monovalent comportant de 1 à 5 atomes de carbone et comportant ou ne comportant pas un groupe fonctionnel, et peuvent être identiques ou différents ; Y représente un groupe hydrocarbure divalent comportant de 2 à 20 atomes de carbone ; et a et b représentent chacun un nombre entier de 0 ou 1, dans lequel plusieurs groupes $OR^3$ peuvent être identiques ou différents, et plusieurs groupes $OR^4$ peuvent être identiques ou différents),

composant (ii) :

au moins un élément choisi parmi un composé organosilicium contenant un groupe amino représenté par la formule générale (3) suivante et un hydrolysat de celui-ci :

$R^7_nSi(OR^8)_{4-n}$ (3)

(dans la formule, $R^7$ représente un groupe hydrocarbure contenant un groupe amino monovalent comportant de 1 à 20 atomes de carbone ; $R^8$ représente un groupe alkyle comportant de 1 à 8 atomes de carbone, un groupe aryle comportant de 6 à 10 atomes de carbone, un groupe aralkyle comportant de 7 à 10 atomes de carbone ou un groupe acyle comportant de 2 à 10 atomes de carbone ; et n représente un nombre entier de 1 ou 2, dans lequel lorsque plusieurs groupes $R^7$ sont présents, les plusieurs groupes $R^7$ peuvent être identiques ou différents, et plusieurs groupes $OR^8$ peuvent être identiques ou différents),

composant (iii) :

au moins un élément choisi parmi un composé organosilicium contenant un groupe isocyanate représenté par la formule générale (4) suivante et un hydrolysat de celui-ci :

$R^9_nSi(OR^{10})_{4-n}$ (4)

(dans la formule, $R^9$ représente un groupe hydrocarbure contenant un groupe isocyanate monovalent comportant de 1 à 20 atomes de carbone ; $R^{10}$ représente un groupe alkyle comportant de 1 à 8 atomes de carbone, un groupe aryle comportant de 6 à 10 atomes de carbone, un groupe aralkyle comportant de 7 à 10 atomes de carbone ou un groupe acyle comportant de 2 à 10 atomes de carbone ; et n représente un nombre entier de 1 ou 2, dans lequel lorsque plusieurs groupes $R^9$ sont présents, les plusieurs groupes $R^9$ peuvent être identiques ou différents, et plusieurs groupes $OR^{10}$ peuvent être identiques ou différents).

**2.** Lentille plastique selon la revendication 1, dans laquelle un rapport molaire des groupes fonctionnels dans les composants (i), (ii) et (iii) est de 99/0,5/0,5 à 10/45/45.

**3.** Lentille plastique selon la revendication 1, dans laquelle le composé organosilicium représenté par la formule générale (1) en tant que composé (i) est un $\gamma$-glycidoxypropyltrialcoxysilane.

**4.** Lentille plastique selon la revendication 1, dans laquelle le composé organosilicium représenté par la formule générale (3) en tant que composé (ii) est un $\gamma$-aminopropyltrialcoxysilane.

**5.** Lentille plastique selon la revendication 1, dans laquelle le composé organosilicium représenté par la formule générale (4) en tant que composé (iii) est un $\gamma$-isocyanatopropyltrialcoxysilane.

**6.** Lentille plastique selon l'une quelconque des revendications 1 à 5, dans laquelle un rapport molaire de groupes fonctionnels dans les composants (i), (ii) et (iii) est de 95/2,5/2,5 à 80/10/10 dans la composition de revêtement.

7. Lentille plastique selon l'une quelconque des revendications 1 à 6, dans laquelle la composition de revêtement contient un oxyde métallique sous forme de fines particules.

8. Lentille plastique selon l'une quelconque des revendications 1 à 7, dans laquelle la composition de revêtement contient des particules colloïdes complexes d'oxyde de zirconium-oxyde stannique modifiées (C) qui contiennent des particules colloïdes complexes d'oxyde de zirconium-oxyde stannique (A2) ayant une structure contenant des particules colloïdes d'oxyde de zirconium et des particules colloïdes d'oxyde stannique liées à un rapport de 0,02 à 0, 4 en termes de $SnO_2/ZnO_2$ sur la base du rapport molaire des oxydes, ayant un diamètre de particules de 2,5 à 100 nm, et contenant du $Sb_2O_5$ contenant une amine, en tant que noyau, dont la surface est revêtue de particules colloïdes (B2) d'un complexe oxyde de tungstène-oxyde stannique-dioxyde de silicium ayant un rapport massique $WO_3/SnO_2$ de 0,1 à 100, un rapport massique $SiO_2/SnO_2$ de 0, 1 à 100 et un diamètre de particules de 2 à 7 nm, avec un rapport massique (B2)/(A2) de 0,02 à 1 sur la base du rapport massique des oxydes de métal de celui-ci, et qui a un diamètre de particules de 2,5 à 100 nm.

9. Lentille plastique selon la revendication 1, dans laquelle le substrat contient une lentille de polythiouréthane obtenue par mise en réaction de diisocyanate de xylylène et de polythiol, ou d'une lentille contenant du soufre obtenue par mise en réaction d'un monomère de matière première de lentille contenant un composé comportant un groupe épithio.

10. Lentille plastique selon la revendication 9, dans laquelle dans la lentille contenant du soufre, le composé comportant un groupe épithio est le sulfure de bis(β-épithiopropyle) et/ou le disulfure de bis (β-épithiopropyle).

11. Lentille plastique selon la revendication 9, dans laquelle dans la lentille contenant du soufre, une quantité du composé comportant un groupe épithio est de 60 à 90 % en poids sur la base d'une quantité totale des monomères de matière première de lentille.

12. Lentille plastique selon la revendication 9, dans laquelle dans la lentille de polythiouréthane ayant un indice de réfraction de 1,65 à 1,69 obtenue par mise en réaction de diisocyanate de xylylène et de polythiol, du mercaptométhyldithiaoctanedithiol et/ou du bis(mercaptométhyl)trithiaundécanedithiol sont utilisés comme composant du polythiol.

13. Lentille plastique selon l'une quelconque des revendications 9 à 12, dans laquelle la lentille de polythiouréthane a un indice de réfraction de 1,65 à 1,69 et/ou la lentille contenant du soufre a un indice de réfraction de 1,69 à 1,72.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9208651 A
- JP 2001330701 A
- JP 7026207 A
- EP 1655342 A1
- JP 2005263854 A